(19) Europäisches Patentamt
European Patent Office
Office européen des brevets

(11) Numéro de publication: **0 250 459 B1**

(12) # FASCICULE DE BREVET EUROPEEN

(45) Date de publication de fascicule du brevet: **20.05.92**

(51) Int. Cl.[5]: **A01N 59/16**, A01N 59/20, C02F 1/50, //(A01N59/16,43:90, 43:60,33:12)

(21) Numéro de dépôt: **86906249.7**

(22) Date de dépôt: **14.10.86**

(86) Numéro de dépôt internationale :
**PCT/BE86/00032**

(87) Numéro de publication internationale :
**WO 87/02221 (23.04.87 87/09)**

(54) **COMPOSITIONS DESINFECTANTES ET PROCEDE DE DESINFECTION APPLICABLES A DES LIOUIDES OU DES SURFACES INFECTES.**

(30) Priorité: **17.10.85 LU 86123**

(43) Date de publication de la demande:
**07.01.88 Bulletin 88/01**

(45) Mention de la délivrance du brevet:
**20.05.92 Bulletin 92/21**

(84) Etats contractants désignés:
**AT BE CH DE FR GB IT LI LU NL SE**

(56) Documents cités:
**EP-A- 0 059 978** **FR-A- 2 143 449**
**FR-A- 2 355 512** **US-A- 2 271 378**
**US-A- 4 010 252** **US-A- 4 098 602**

(73) Titulaire: **FABRICOM AIR CONDITIONING S.A.**
**rue du Montenégro, 138 à 144**
**B-1060 Bruxelles(BE)**

(72) Inventeur: **LEGROS, Alain**
**11, rue Docteur Maître**
**B-6248 Nalinnes(BE)**

(74) Mandataire: **Fobe, Edouard et al**
**Bureau Vander Haeghen S.A. Rue Colonel Bourg 108 A**
**B-1040 Bruxelles(BE)**

EP 0 250 459 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention est relative à des compositions désinfectantes et à un procédé de désinfection applicables à des liquides ou des surfaces infectés.

Les compositions et le procédé suivant l'invention sont, en particulier, utilisables pour désinfecter des liquides tels que des eaux ou des huiles de coupe. Ils sont également applicables à des surfaces infectées, par exemple des surfaces d'installations industrielles ou hospitalières, notamment des cuves, tuyauteries, etc., dans les industries alimentaires, notamment les brasseries, laiteries, etc.

Dans le cas de l'application de la composition désinfectante dans des industries alimentaires, telles que définies ci-dessus, on pourra, sans diminution d'efficacité, associer cette composition à un produit de nettoiement, tel qu'un surfactant, de préférence de type non ionique.

Dans une application particulière, les compositions et le procédé suivant l'invention sont utilisables, d'une part, pour traiter des eaux qui doivent ou peuvent être recirculées comme, par exemple, des eaux de piscines de bassins de natation et, d'autre part, pour traiter des eaux résiduaires, voire même des effluents, qui ne doivent ou ne peuvent pas être recirculés et qui sont destinés notamment à des usages tels que : conditionnement d'air, eaux à usages domestiques, eaux de boisson, etc.

Il est connu de désinfecter, c'est-à-dire de débarrasser de ses germes bactériens, l'eau de bassins de natation a l'aide d'halogènes, notamment de chlore ou de brome. L'emploi de ces produits présente cependant des inconvénients, tels que l'apparition d'odeurs désagréables, l'irritation de certaines muqueuses, voire même la formation de composés halogénés ayant une action cancérigène.

Il est également connu d'utiliser des composés peroxydés, tels que du peroxyde d'hydrogène ou du persulfate de sodium ou de potassium pour éliminer les germes microbiens de l'eau de piscines de natation. De même, l'élimination des algues et germes peut aussi s'effectuer en traitant l'eau au moyen d'ions de cuivre et/ou d'argent.

L'utilisation combinée de composés peroxydés avec des ions de cuivre et/ou d'argent, ainsi que celle de composés d'ammonium quaternaire et de peroxyde d'hydrogène, ont également été proposées (voir DE-C-22 35 539, DE-C-25 30 487 et DE-C-29 11 288).

Enfin, on a proposé (voir EP-A-0 059 978) le traitement d'eaux de piscines de natation et d'eaux industrielles à l'aide d'une combinaison (a) de composés d'ammonium quaternaire, (b) de sels de cuivre et/ou de sels d'argent hydrosolubles et (c) de composés peroxydés libérant de l'oxygène, tels que du monopersulfate de potassium ou du peroxydisulfate de potassium.

On a constaté à présent que l'emploi simultané d'un polymère d'ammonium quaternaire, ainsi que d'ions cuivre et/ou argent et/ou manganèse en très faibles quantités, permet la désinfection d'eau, d'huiles de coupe et de surfaces infectées, en un temps très court, sans qu'il soit nécessaire d'utiliser en même temps un composé peroxydé.

En particulier, on a constaté un effet de synergie manifeste lorsqu'on utilise à la fois au moins un polymère ou copolymère d'ammonium quaternaire et des ions de cuivre et/ou d'argent et/ou de manganèse, plutôt que le polymère ou copolymère d'ammonium seul, des ions de cuivre seuls, des ions d'argent seuls ou des ions de manganèse seuls.

La présente invention concerne donc une composition désinfectante contenant, comme ingrédients actifs, au moins un polymère d'ammonium quaternaire et des ions d'au moins un métal choisi parmi le cuivre, l'argent et le manganèse, cette composition désinfectante étant essentiellement caractérisée en ce qu'elle contient comme polymère d'ammonium quaternaire au moins un polymère ou copolymère obtenu

par condensation d'au moins une amine tertiaire difonctionnelle répondant a l'une ou l'autre des formules (I), (II) et (III) suivantes :

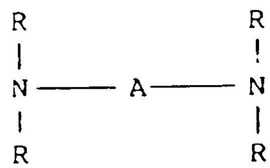

(I)

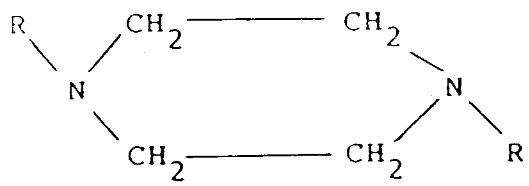

(II)

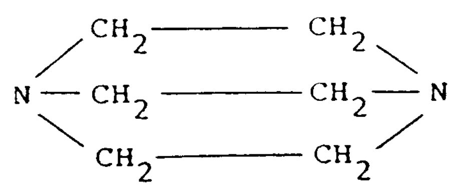

(DABCO) (III)

avec au moins un dihalogénure organique répondant à la formule (IV) suivante :

X—B—X (IV)

dans lesquelles formules (I), (II), (III) et (IV), les symboles R, A, B et X ont les significations suivantes :

R désigne un radical alkyle inférieur ou le radical $-CH_2-CH_2-OH$ ;

X désigne un atome d'halogène, de préférence un atome de chlore ou de brome, et

A et B, qui peuvent être identiques ou différents, répondent à l'une ou l'autre des cinq formules suivantes :

(1)

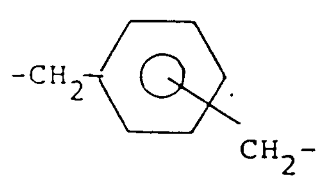

où l'un des substituants $-CH_2-$ peut être en position ortho, méta ou para,

(2)

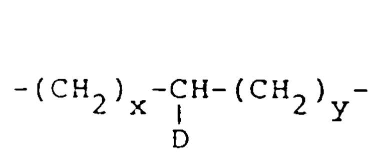

où D désigne de l'hydrogène ou un radical alkyle contenant moins de quatre atomes de carbone, et x et y sont des nombres entiers inférieurs à 5 dont l'un peut avoir une valeur égale à 0, tandis que la somme x + y est au moins égale à 1 et au maximum égale à 10,

le radical (2) pouvant contenir au maximum deux doubles liaisons,

(3)

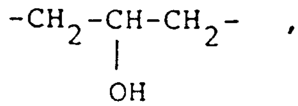

(4) $-(CH_2)_n-O-(CH_2)_n-$

où n est égal à 2 ou 3, et

(5)

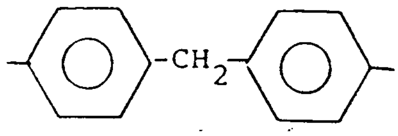

la somme des atomes de carbone contenus dans A et B, lorsque A et B sont présents , étant comprise entre 9 et 14.

L'invention concerne également un procédé de désinfection consistant essentiellement à traiter un liquide ou une surface infectée par des ions d'un métal choisi parmi le cuivre, l'argent et le manganèse, ainsi que par au moins un polymère ou copolymère d'ammonium quaternaire du type défini plus haut.

Selon une première forme de réalisation des compositions ou du procédé suivant l'invention, on utilise, comme polymère d'ammonium quaternaire, un polymère de formule (V) suivante :

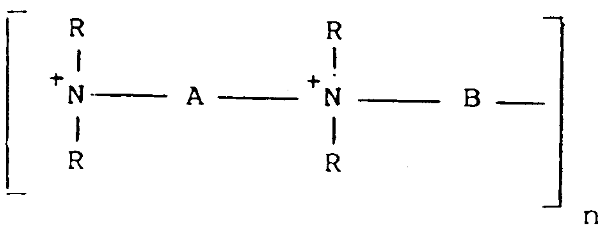 $(2\ X^-)_n$ (V)

dans laquelle R, A, B et X ont les significations données plus haut, tandis que n indique le degré de polymérisation.

Dans une seconde forme de réalisation des compositions et du procédé suivant l'invention, on utilise un polymère d'ammonium quaternaire répondant à la formule (VI) suivante :

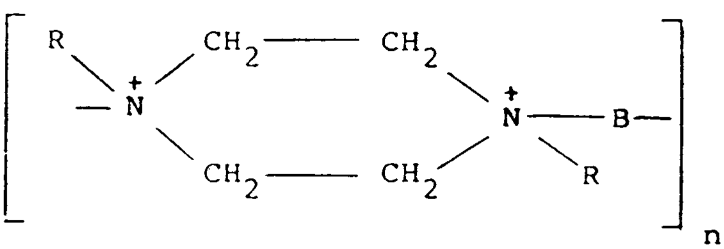 $(2\ X^-)_n$ (VI)

dans laquelle R, X, B et n ont les significations données plus haut.

Dans une troisième forme de réalisation des compositions et du procédé suivant l'invention, on utilise un polymère d'ammonium quaternaire de formule (VII) suivante :

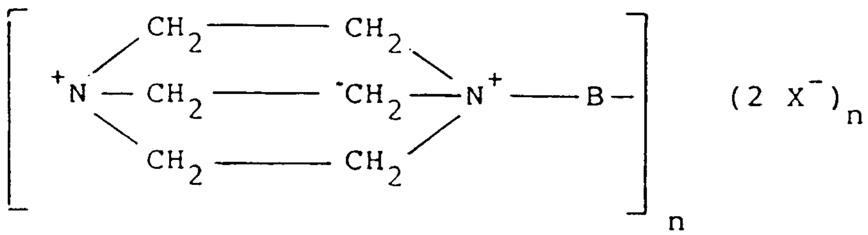

(VII)

dans laquelle B, X et n ont les significations données plus haut.

Les polymères d'ammonium quaternaire de formule (V) obtenus par condensation d'une diamine de formule (I) avec un dihalogénure de formule (IV) sont des composés connus, dont la synthèse et l'utilisation dans des compositions cosmétiques, notamment pour le traitement des cheveux et de la peau, sont décrites dans U.S.-A-4.217.914.

Par ailleurs, U.S.-A-4.035.480 décrit la préparation et l'utilisation, comme agents bactéricides, de mélanges de polymères d'ammonium quaternaire obtenus par condensation d'un 1,4-dihalo-2-butène, en particulier le 1,4-dichloro-2-butène, avec une amine tertiaire difonctionnelle hétérocyclique de formule (II), dans laquelle les symboles R désignent chacun un radical méthyle.

Certains polymères de formule (VII) formés par condensation de la diamine de formula (III) avec un dihalogénure organique de formule (IV) sont des composés connus dont la préparation et les propriétés microbicides sont décrites dans U.S.-A-4.025.627 et US-4.035.480, ainsi que dans une publication de Salomone J.C. et Snider B., Journal of Polymer Science, Part A-1, vol. 8, p. 3495-3501, 1970.

Certains copolymères obtenus par condensation de diamines tertiaires trifonctionnelles répondant à l'une ou l'autre des formules (I), (II) et (III) avec un dihalogénure organique de formule (IV) sont décrits dans U.S.-A-3.933.812, US-A-33.928.923, US-A-4.025.617 et US-A 4.026.945 qui décrivent les propriétés bactéricides de ces copolymères.

L'utilisation simultanée, conformément à la présente invention, d'au moins un polymère ou copolymère d'ammonium quaternaire formé par condensation d'une amine tertiaire difonctionnelle de formule (I), (II) ou (III) avec un dihalogénure organique de formule (IV) et d'au moins un ion choisi parmi les ions de cuivre, d'argent et de manganèse, procure des effets inattendus sur la vitesse de destruction de nombreux microorganismes.

En fait, on a découvert que les ions de cuivre, d'argent et/ou de manganèse potentialisent, de façon remarquable, la destruction des microorganismes par les polymères ou copolymères d'ammonium quaternaire précités.

Cet effet de synergie inattendu sera démontré dans la suite du présent mémoire.

Les polymères et copolymères d'ammonium quaternaire utilisés, dans les exemples I à XXI donnés plus loin pour démontrer les effets bactéricides remarquables de ces polymères et copolymères, lorsqu'ils sont appliqués conjointement avec des ions de cuivre, d'argent et/ou de manganèse, ont été synthétisés par la méthode générale décrite ci-après :

Des quantités stoechiométriques (1 mole par litre) de diamine tertiaire de formule (I), (II) et/ou (III) et de dihalogénure organique de formule (IV) ont été agitées à la température ambiante dans un solvant constitué de 80 % en volume de diméthylformamide et de 20 % en volume d'eau. Lorsque plusieurs diamines de formule (I), (II) et/ou (III) ont été utilisées, la somme de leurs concentrations était également de 1 mole par litre.

Après un temps de réaction déterminé, le polymère et/ou copolymère formé a été précipité par addition d'acétone anhydre et le précipité a finalement été filtré et séché.

Le pourcentage en poids d'ions halogénures du polymére ou copolymère formé par la réaction de condensation a été déterminé par titration à l'aide de nitrate d'argent, en présence de chromate de sodium comme indicateur de fin de titration.

Le rendement de la polymérisation et/ou copolymérisation a été calculé en utilisant la formule suivante :

$$\eta = \frac{\text{poids de polymère ou copolymère récupéré}}{\text{somme des poids des réactifs}}$$

Les éventuelles modifications de cette méthode générale sont précisées dans les différents exemples de synthèse donnés ci-après.

Préparation de polymères et copolymères d'ammonium quaternaire répondant à l'une quelconque des formules (V), (VI) et (VII)

EXEMPLE 1 : Préparation d'un polymère de formule (VII) dans laquelle

$B = CH_2-CH_2-CH_2$ et
$X = Br$

27,9 g du produit dénommé DABCO de formule (III) et 50 g de 1,3-dibromopropane ont été agités pendant 216 heures à 25 ° C dans 600 ml de méthanol anhydre. Le rendement de la réaction a été de 32 % et le polymère contenait 43,21 % de bromure.

EXEMPLE 2 : Préparation d'un polymère de formule (V) dans laquelle

$R = -CH_3$, $A = -CH_2-CH_2-$,
$B = -CH_2-$ 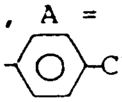 $-CH_2-$ et
$X = Br$

22 g de N,N,N',N'-tétraméthyléthane diamine et 50 g de bromure de p-xylylidène ont été chauffés à reflux pendant 50 heures dans 600 ml de méthanol anhydre. Le mélange réactionnel a ensuite été maintenu à 20 ° C pendant 40 heures. Le rendement de la réaction a été de 72 % et le polymère contenait 38,5 % de bromure.

EXEMPLE 3 : Préparation d'un polymère de formule (VI) dans laquelle

$R = -CH_3$, $B = -CH_2-CH{=}CH-CH_2-$ et
$X = Br$

26,7 g de N,N'-méthylpipérazine et 50 g de 1,4-dibromo-2-butène ont été chauffés à reflux pendant 1 heure dans 600 ml de méthanol anhydre. Le rendement de la réaction a été de 94 % et le polymère contenait 47,26 % de bromure.

EXEMPLE 4 : Préparation d'un polymère de formule (VII) dans laquelle

$$B = -CH_2-\underset{\displaystyle OH}{\underset{|}{CH}}-CH_2-$$

$$\text{et } X = Br$$

25,7 g du produit dénommé DABCO de formule (III) et 50 g de 1,3-dibromo-2-propanol ont été chauffés à reflux pendant 52 heures dans 600 ml d'un mélange contenant 50 % de méthanol et 50 % de diméthylformamide. Le rendement de la réaction a été de 48 % et le polymère contenait 38,73 % de bromure.

EXEMPLE 5 : Préparation d'un polymère de formule (VII) dans laquelle

$$B = -CH_2-CH_2-CH_2-CH_2-CH_2- \text{ et}$$

$$X = Br$$

24,4 g du produit dénommé DABCO de formule (III) et 50 g de 1,5-dibromo-pentane ont été chauffés à reflux pendant 82 heures dans 600 ml de méthanol. Le rendement de la réaction a été de 80 % et le polymère contenait 41,7 % de bromure.

EXEMPLE 6 : Préparation d'un polymère de formule (VII) dans laquelle

$$B = -CH_2-CH_2-CH_2-CH_2- \text{ et}$$

$$X = Br$$

26 g du produit dénommé DABCO de formule (III) et 50 g de 1,4-dibromo butane ont été chauffés à reflux pendant 41 heures dans 600 ml de méthanol anhydre. Le rendement de la réaction a été de 55 % et le polymère contenait 43,01 % de bromure.

EXEMPLE 7 : Préparation d'un polymère de formule (VII) dans laquelle

$$B = -CH_2-CH{=}CH-CH_2- \text{ et}$$

$$X = Br$$

26,2 g du produit dénommé DABCO de formule (III) et 50 g de 1,4-dibromo-2-butène ont été chauffés à reflux pendant 1 heure dans 600 ml de méthanol anhydre. Le rendement de la réaction a été de 99 % et le polymère contenait 41,18 % de bromure.

EXEMPLE 8 : Préparation d'un polymère de formule (VII) dans laquelle

$$B = -CH_2-CH_2-O-CH_2-CH_2- \text{ et}$$
$$X = Br$$

24,2 g du produit dénommé DABCO de formule (III) et 50 g de 1,5-dibromo-diéthyléther ont été agités pendant 432 heures à 20 °C dans 600 ml d'un mélange contenant 50 % de méthanol anhydre et 50 % de diméthylformamide. Le rendement de la réaction a été de 63 % et le polymère contenait 38,94 % de bromure.

EXEMPLE 9 : Préparation d'un polymère de formule (VII) dans laquelle

$$B = -CH_2-CH_2-CH_2- \text{ et}$$
$$X = Br$$

38,8 g du produit dénommé DABCO de formule (III) et 70 g de 1,3-dibromopropane ont été mis en réaction pendant 110 heures à 25 °C dans 500 ml d'un mélange contenant 80 % de diméthylformamide et 20 % d'eau. Le rendement de la réaction a été de 87 % et le polymère contenait 43,62 % de bromure.

EXEMPLE 10 : Préparation d'un polymère de formule (V) dans laquelle

$$R = -CH_3,$$
$$A = -CH_2-CH_2-CH_2-CH_2-CH_2-CH_2-,$$
$$B = -CH_2-CH_2-CH_2- \text{ et}$$
$$X = Br$$

86,15 g de N,N,N',N'-tétraméthylhexane diamine et 100,95 g de 1,3-dibromopropane ont été mis en réaction pendant 205 heures à 25 °C dans 550 ml d'un mélange contenant 80 % de diméthylformamide et 20 % d'eau. Le rendement de la réaction a été supérieur à 72 % et le polymère contenait 41,76 % de bromure.

EXEMPLE 11 : Préparation d'un polymère de formule (V) dans laquelle

$$R = -CH_3,$$
$$A = -CH_2-CH_2-CH_2-CH_2-CH_2-CH_2-,$$
$$B = -CH_2-CH_2-CH_2- \text{ et}$$
$$X = Br$$

172,3 g*de N,N,N',N'-tétraméthylhexane diamine et 201,9 g*de 1,3-dibromopropane ont été mis en réaction pendant 182 heures à 25 °C dans 550 ml d'un mélange*contenant 80 % de diméthylformamide et 20 % d'eau. Après cette réaction, on a précipité le polymère à l'aide d'acétone anhydre. Le rendement de la réaction a été de 80 % et le polymère contenait 41,37 % de bromure.

(* soit une solution 2 molaire pour chaque réactif).

EXEMPLE 12 : Préparation d'un polymère de formule (V) dans laquelle

$$R = -CH_3,$$
$$A = -CH_2-CH_2-CH_2-CH_2-CH_2-CH_2-,$$
$$B = -CH_2-CH_2-CH_2- \text{ et}$$
$$X = Br$$

25,6 g de N,N,N',N'-tétraméthylhexane diamine et 30 g de 1,3-dibromopropane ont été mis en réaction pendant 48 heures sous reflux dans 500 ml de méthanol anhydre. On a recueilli, après cette réaction, un polymère contenant 40,07 % de bromure. Ce polymère a été introduit dans 300 ml d'eau et le mélange a été chauffé à reflux pendant 75 heures. On a recueilli ainsi un polymère contenant 41,57 % de bromure.

EXEMPLE 13 : Préparation d'un polymère de formule (V) dans laquelle

$$R = -CH_3,$$
$$A = -CH_2-CH_2-CH_2-CH_2-CH_2-CH_2-,$$
$$B = -CH_2-CH_2-CH_2- \text{ et}$$
$$X = Br$$

25,6 g de N,N,N',N'-tétraméthylhexane diamine et 30 g de 1,3-dibromopropane ont été mis en réaction pendant 24 heures sous reflux dans 500 ml d'isopropanol. On a ensuite ajouté au mélange réactionnel 50 ml d'eau. La composition ainsi obtenue a été mise en réaction pendant 24 heures sous reflux. On a récupéré un polymère contenant 39,96 % de bromure.

EXEMPLES 14 à 18 :

Préparation de polymères de formule (V) dans laquelle R, A, B et X ont les significations indiquées dans le tableau I.

Le tableau I indique les conditions de préparation des divers polymères, le rendement de la réaction η, la quantité d'halogénure contenu dans le polymère exprimée en δ poids et le temps de réaction.

TABLEAU I

| Exemple n° | Remarques | R | A | B | X | temps de réaction heures | η % | % halogénure |
|---|---|---|---|---|---|---|---|---|
| 14 | solvant utilisé : diméthylformamide | r | c | a | Br | 168 | 85 | 42,19 |
| 15 | addition de 30 % d'eau après 2 h | r | a | d | Br | 168 | 96 | 38,98 |
| 16 | solvant : 50 % diméthylformamide et 50 % d'eau | r | c | b | Br | 480 | 95 | 39,83 |
| 17 | - | r | b | e | Br | 480 | 83 | 40,53 |
| 18 | addition de 30 % d'eau après 2 h | r | c | d | Br | 72 | 89,4 | 35,48 |

r = $CH_3$

a = $-CH_2-CH_2-CH_2-$

b = $-CH_2-CH=CH-CH_2-$

c = $-CH_2-CH_2-CH_2-CH_2-CH_2-CH_2-$

d = 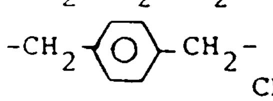

e = 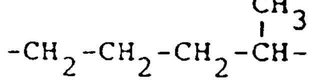

EXEMPLES 19 et 20

Préparation de polymères de formule (VI) dans laquelle R, B et X ont les significations indiquées dans le tableau II.

Le tableau II indique les conditions de préparation des divers polymères, le rendement de la réaction η, la quantité d'halogénure contenu dans le polymère exprimée en % poids et le temps de réaction.

TABLEAU II

| Exemple n° | Remarques | R | B | X | temps de réaction heures | η % | % halogénure |
|---|---|---|---|---|---|---|---|
| 19 | - | r | b | Br | 264 | 99 | 46,18 |
| 20 | solvant : 50 % de diméthylformamide et 50 % d'eau | r | d | Br | 72 | 90,4 | 39,13 |

r = $-CH_3$

b = $-CH_2-CH=CH-CH_2-$

d = $-CH_2-$ 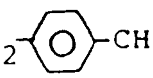 $-CH_2-$

EXEMPLES 21 à 27

Préparation de polymères de formule (VII) dans laquelle B et X ont les significations indiquées dans le tableau III. Ce tableau indique également les conditions de préparation des divers polymères, le rendement de la réaction $\eta$, la quantité d'halogénure contenu dans le polymère exprimée en % poids et le temps de réaction.

TABLEAU III

| Exemple n° | Remarques | B | X | Temps de réaction heures | $\eta$ % | % halogénure |
|---|---|---|---|---|---|---|
| 21 | 0,7 molaire en réactifs | f | Br | 672 | 56 | 39,79 |
| 22 | 0,7 molaire en réactifs | a | Br | 432 | 91,1 | 38,91 |
| 23 | - | c | Br | 408 | 89,3 | 43,06 |
| 24 | - | g | Br | 408 | 98 | 34,88 |
| 25 | - | h | Br | 410 | 93,1 | 36,36 |
| 26 | - | d | Br | 144 | 99 | 38,77 |
| 27 | - | b | Br | 72 | 100 | 46,44 |

a = $-CH_2-CH_2-CH_2-$

b = $-CH_2-CH=CH-CH_2-$

c = $-CH_2-CH_2-CH_2-CH_2-CH_2-CH_2-$

d = $-CH_2-$ 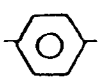 $-CH_2-$

f = $-CH_2-\underset{OH}{\underset{|}{CH}}-CH_2-$

g = $-CH_2-CH_2-CH_2-CH_2-CH_2-CH_2-CH_2-CH_2-$

h = $-CH_2-CH_2-CH_2-CH_2-CH_2-CH_2-CH_2-CH_2-CH_2-CH_2-$

EXEMPLE 28 : Préparation d'un copolymère d'ammonium quaternaire

28,04 g du produit dénommé DABCO de formule (III), 28,55 g de N,N'-diméthyl-pipérazine et 100,95 g de 1,3-dibromopropane ont été ajoutés à 500 ml d'un mélange contenant 80 % de diméthylformamide et 20 % d'eau. Le mélange réactionnel a été agité pendant 360 heures à 25 ° C. Le rendement de la réaction était de 83 % et le pourcentage de bromure dans le copolymère était de 46,08 %.

EXEMPLE 29 : Préparation d'un copolymère d'ammonium quaternaire

28,04 g de produit dénommé DABCO de formule (III), 43,08 g de N,N,N',N'-tétraméthylhexane diamine et 115 g de 1,5-dibromopentane ont été mis en réaction à 25 ° C sous agitation pendant 480 heures dans 500 ml d'un mélange contenant 80 % de diméthylformamide et 20 % d'eau. Le rendement de la réaction a été de 91 % et le pourcentage de bromure dans le copolymère était de 38,42 %.

EXEMPLE 30 : Préparation d'un polymère de formule (VII) dans laquelle

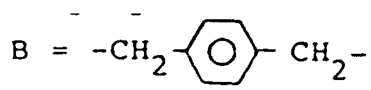

et X = Br

21,3 g de produit dénommé DABCO de formule (III) et 50 g de 1,4-dibromo-p-xylylidène ont été mis en réaction dans 600 ml d'un mélange contenant 80 % de méthanol et 20 % d'eau pendant 24 heures sous reflux.

On a cristallisé le polymère en refroidissant le mélange réactionnel et on l'a récupéré comme indiqué dans le protocole expérimental décrit auparavant.

Le rendement de la réaction a été de 96 % et le pourcentage en poids de bromure dans le polymère était de 36,57 %.

Parmi les nombreux polymères et copolymères d'ammonium quaternaire utilisables dans les compositions désinfectantes et dans le procédé selon l'invention conjointement avec des ions cuivre, argent et/ou manganèse, on peut citer en particulier le bromure d'hexadiméthrine répondant à la formule (II) suivante :

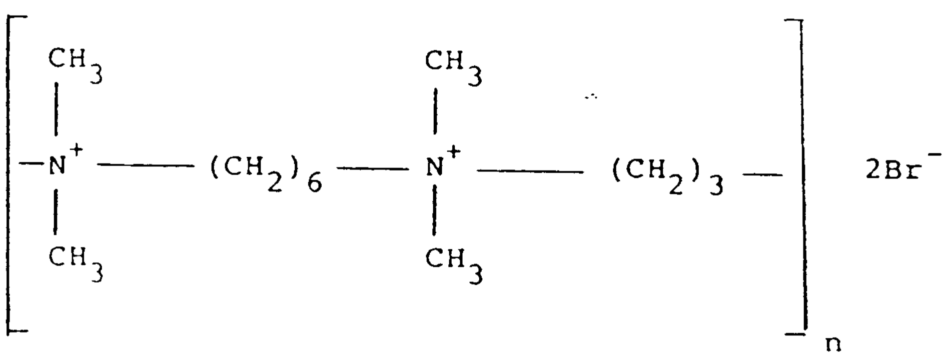

(II)

dans laquelle n = 14 à 28. Ce polymère est connu dans les domaines cosmétique et pharmacologique, notamment comme antagoniste de l'héparine.

Les compositions désinfectantes suivant la présente invention se présentent, de préférence, sous forme de solutions aqueuses contenant des proportions variables d'au moins un polymère d'ammonium quaternaire de formule (V), (VI) et/ou (VII), ou d'au moins un copolymère d'ammonium quaternaire tel que défini plus haut, ainsi que des ions de cuivre, d'argent et/ou de manganèse sous forme de sels hydrosolubles de ces métaux tels que sulfate, chlorure, nitrate, etc.

Ces compositions désinfectantes suivant l'invention sont simplement ajoutées aux liquides à désinfecter ou appliquées sur la surface de l'objet à désinfecter.

Dans le cas où la composition ou le procédé suivant l'invention sont appliqués à la désinfection d'eau, on utilise, de préférence, au moins un polymère d'ammonium quaternaire de formule (V), (VI) ou (VII) ou un copolymère tel que défini plus haut, à raison de 0,5 à 1000 parties par million (ppm) du milieu aqueux à désinfecter. Quant aux ions des métaux, tels que le cuivre et l'argent, qui peuvent être produits au sein de ce milieu aqueux par électrolyse ou par addition à celui-ci de sels hydrosolubles de ces métaux, tels que sulfate, chlorure, nitrate, etc., ils sont utilisés, de préférence, à des concentrations de 0,5 à 5 ppm pour les ions de cuivre et de 1 à 50 ppb (parties par milliard), plus particulièrement de 1 à 10 ppb pour les ions d'argent.

L'action synergique inattendue résultant de l'utilisation simultanée d'au moins un polymère d'ammonium quaternaire de formule V, VI ou VII ou d'un copolymère d'ammonium quaternaire, ainsi que d'ions de cuivre et d'ions d'argent est illustrée dans les essais comparatifs suivants, basés sur la vitesse de destruction de divers micro-organismes choisis à titre d'exemples non limitatifs parmi les micro-organismes infestant couramment les eaux de piscines de natation.

Ces micro-organismes sont les suivants :

- Escherichia coli ATCC 11229
- Pseudomonas aeruginosa ATCC 17934
- Staphylococcus aureus ATCC 6538
- Streptococcus faecalis ATCC 6569
- Saccharomyces cerevisiae
- Candida albicans
- Lactobacillus

Pour effectuer les essais, on a utilisé la méthode bien connue de dilutions successives dans des tubes à essais et ensemencement sur un milieu de culture tryptone-glucose-extrait agar et en utilisant un polyphosphate comme neutralisant.

Les essais de désinfection d'eau dont il est question dans les exemples I à XXVIII suivants ont été effectués dans de l'eau de ville ayant une dureté d'environ 35 ° F (~1,7 ° C), préalablement filtrée sur un filtre millipore de 0,22 µm après trois repiquages successifs de chacune des souches.

EXEMPLE I

Souche bactérienne : Staphylococcus aureus ATCC 6538 Concentration du micro-organisme :

3,45.$10^6$ germes par ml d'eau Polymère d'ammonium quaternaire de l'exemple 10.

| Vitesse de destruction des germes bactériens | | |
|---|---|---|
| Quantité et nature des ingrédients ajoutés à l'eau | Temps de contact (minutes) | % de bactéries restantes |
| - 1 ppm ions cuivre | 1 | 100 |
| - 40 ppb ions argent | 1 | 100 |
| - 3 ppm polymère de l'exemple 10 | 1 | 1,45 |
| - 1 ppm ions cuivre + 40 ppb ions argent + 3 ppm polymère de l'exemple 10 | 1 | 0,003 |

EXEMPLE II

Souche bactérienne : Escherichia coli ATCC 11229 Concentration initiale en germes bactériens : $21.10^4$ germes par ml Polymère d'ammonium de l'exemple 10.

| Vitesse de destruction des germes bactériens | | |
|---|---|---|
| Quantité et nature des ingrédients ajoutés à l'eau | Temps de contact (minutes) | % de bactéries restantes |
| - 3 ppm polymère de l'exemple 10 | 5 | 3 |
| - 1 ppm ions cuivre | 5 | ~ 100 |
| - 40 ppb ions argent | 5 | ~ 100 |
| - 3 ppm polymère de l'exemple 10 + 1 ppm ions cuivre + 40 ppb ions argent | 5 | 0,009 |

EXEMPLE III

Souche bactérienne : Pseudomonas aeruginosa ATCC 17934 Concentration initiale en germes : $0{,}92.10^6$ germes par ml Polymère d'ammonium quaternaire de l'exemple 10.

| Vitesse de destruction des germes bactériens | | |
|---|---|---|
| Quantité et nature des ingrédients ajoutés à l'eau | Temps de contact (minutes) | % de bactéries restantes |
| - 1 ppm polymère de l'exemple 10 | 5 | 48 |
| - 1 ppm ions cuivre | 5 | ~ 100 |
| - 5 ppb ions argent | 5 | ~ 100 |
| - 1 ppm polymère de l'exemple 10 + 1 ppm ions cuivre + 5 ppb ions argent | 5 | 0,008 |

EXEMPLE IV

Souche bactérienne : Streptococcus faecalis ATCC 6569 Concentration en germes bactériens : $1,16.10^6$ germes par ml Polymère d'ammonium quaternaire de l'exemple 10.

| Vitesse de destruction des germes bactériens | | |
| --- | --- | --- |
| Quantité et nature des ingrédients ajoutés à l'eau | Temps de contact (minutes) | % de bactéries restantes |
| - 3 ppm polymère de l'exemple 10 | 1 | 0,024 |
| - 1 ppm ions cuivre | 1 | ~ 100 |
| - 40 ppb ions argent | 1 | ~ 100 |
| - 3 ppm polymère de l'exemple 10 + 1 ppm ions cuivre + 40 ppb ions argent | 1 | 0,0004 |

EXEMPLE V

Souche bactérienne : Escherichia coli ATCC 11229 Concentration en germes bactériens : $10,8.10^4$ germes par ml Polymère d'ammonium quaternaire de l'exemple 10.

| Vitesse de destruction des germes bactériens | | |
|---|---|---|
| Quantité et nature des ingrédients ajoutés à l'eau | Temps de contact (minutes) | % de bactéries restantes |
| - 3 ppm polymère de l'exemple 10 | 5 | 0,4 |
| - 1 ppm ions cuivre | 5 | ± 100 |
| - 40 ppb ions argent | 5 | ± 100 |
| - 10 ppb ions argent | 5 | ± 100 |
| - 3 ppm polymère de l'exemple 10 + 1 ppm ions cuivre | 5 | 0,006 |
| - 3 ppm polymère de l'exemple 10 + 10 ppb ions argent | 5 | 0,13 |
| - 3 ppm polymère de l'exemple 10 + 40 ppb ions argent | 5 | 0,008 |
| - 3 ppm polymère de l'exemple 10 + 1 ppm ions cuivre + 40 ppb ions argent | 5 | 0,0009 |

EXEMPLE VI

Souche bactérienne : Escherichia coli ATCC 11229 Concentration initiale en germes bactériens : $93.10^4$ germes par ml Polymère d'ammonium quaternaire de l'exemple 10.

| Vitesse de destruction des germes bactériens | | | |
|---|---|---|---|
| Quantité et nature des ingrédients ajoutés à l'eau | % de bactéries restantes après | | |
| | 30 secondes | 1 minute | 5 minutes |
| 1 ppm Cu | ~ 500 | ~ 500 | ~ 500 |
| 5 ppb Ag | ~ 100 | ~ 500 | ~ 500 |
| 5 ppm polymère de l'exemple 10 | 8,98 | 2,60 | 0,12 |
| 1 ppm Cu + 5 ppm polymère de l'exemple 10 | 2,41 | 1,11 | 0,11 |
| 1 ppm Cu + 20 ppb Ag + 5 ppm polymère de l'exemple 10 | 1,76 | 0,18 | 0,007 |

EXEMPLE VII

Souche bactérienne : Escherichia coli ATCC 11229 Concentration initiale en germes bactériens : $93.10^4$ germes par ml Polymère d'ammonium de l'exemple 6.

| Vitesse de destruction des germes bactériens | | |
|---|---|---|
| Quantité et nature des ingrédients ajoutés à l'eau | % de bactéries restantes après | |
| | 1 minute | 5 minutes |
| 20 ppm du polymère de l'exemple 6 | 22,58 | 1,41 |
| 20 ppm du polymère de l'exemple 6 + 1 ppm Cu + 20 ppb Ag | 1,02 | 0,04 |

EXEMPLE VIII

Souche bactérienne : Streptococcus faecalis ATCC 6569 Concentration initiale en germes bactériens : $85,5.10^4$ germes par ml Polymère d'ammonium de l'exemple 2.

| Vitesse de destruction des germes bactériens | |
|---|---|
| Quantité et nature des ingrédients ajoutés à l'eau | % de bactéries restantes après 1 minute |
| 1 ppm Cu | ~ 100 |
| 5 ppb Ag | ~ 100 |
| 10 ppm du polymère de l'exemple 2 | 0,17 |
| 10 ppm du polymère de l'exemple 2 + 1 ppm Cu + 5 ppb Ag | 0,03 |

EXEMPLE IX

Souche bactérienne : Streptococcus faecalis ATCC 6569 Concentration initiale en germes bactériens : $85,5.10^4$ germes par ml Polymère d'ammonium de l'exemple 3.

| Vitesse de destruction des germes bactériens | |
|---|---|
| Quantité et nature des ingrédients ajoutés à l'eau | % de bactéries restantes après 5 minutes |
| 1 ppm Cu | ~ 100 |
| 5 ppb Ag | ~ 100 |
| 10 ppm du polymère de l'exemple 3 | 0,35 |
| 10 ppm du polymère de l'exemple 3 + 1 ppm Cu + 5 ppb Ag | 0,0006 |

EXEMPLE X

Souche bactérienne : Streptococcus faecalis ATCC 6569 Concentration initiale en germes bactériens : $85{,}5.10^4$ germes par ml Polymère d'ammonium de l'exemple 7.

| Vitesse de destruction des germes bactériens | | |
|---|---|---|
| Quantité et nature des ingrédients ajoutés à l'eau | % de bactéries | restantes après |
| | 1 minute | 5 minutes |
| 1 ppm Cu | ~ 100 | ~ 100 |
| 5 ppb Ag | ~ 100 | ~ 100 |
| 10 ppm du polymère de l'exemple 7 | 0,068 | 0,007 |
| 10 ppm du polymère de l'exemple 7 + 1 ppm Cu + 5 ppb Ag | 0,015 | 0,0003 |

EXEMPLE XI

Souche bactérienne : Escherichia coli ATCC 11229 Concentration initiale en germes bactériens : $1{,}2.10^4$ germes par ml Polymère d'ammonium de l'exemple 8.

| Vitesse de destruction des germes bactériens | | | |
|---|---|---|---|
| Quantité et nature des ingrédients ajoutés à l'eau | % de bactéries restantes après | | |
| | 1 minute | 5 minutes | 15 minutes |
| 1 ppm Cu | ~ 100 | ~ 100 | ~ 100 |
| 20 ppb Ag | ~ 100 | ~ 100 | ~ 100 |
| 5 ppm du polymère de l'exemple 8 | 37,83 | 4,76 | 1,31 |
| 5 ppm du polymère de l'exemple 8 + 1 ppm Cu | 10,04 | 0,57 | ! 0,027 |
| 5 ppm du polymère de l'exemple 8 + 1 ppm Cu + 20 ppb Ag | 5,02 | 0,05 | 0,002 |

EXEMPLE XII

Souche bactérienne : Escherichia coli ATCC 11229 Concentration initiale en germes bactériens : $1{,}25.10^4$ germes par ml Polymère d'ammonium de l'exemple 1.

| Vitesse de destruction des germes bactériens | | | |
|---|---|---|---|
| Quantité et nature des ingrédients ajoutés à l'eau | % de bactéries restantes après | | |
| | 1 minute | 5 minutes | 15 minutes |
| 1 ppm Cu | ~ 100 | ~ 100 | ~ 100 |
| 20 ppb Ag | ~ 100 | ~ 100 | ~ 95 |
| 5 ppm du polymère de l'exemple 1 | 16,25 | 1,88 | 0,55 |
| 5 ppm du polymère de l'exemple 1 + 1 ppm Cu | 3,21 | 0,45 | 0,18 |
| 5 ppm du polymère de l'exemple 1 + 1 ppm Cu + 20 ppb Ag | 2,40 | 0,09 | 0,008 |

EXEMPLE XIII

Souche bactérienne : Staphylococcus aureus ATCC 6538 Concentration initiale en germes bactériens : $40.10^4$ germes par ml Polymère d'ammonium de l'exemple 9.

| Vitesse de destruction des germes bactériens | |
|---|---|
| Quantité et nature des ingrédients ajoutés à l'eau | % de bactéries restantes après 1 minute |
| 1 ppm Cu | ~ 100 |
| 5 ppb Ag | ~ 100 |
| 5 ppm du polymère de l'exemple 9 | 3,1 |
| 5 ppm du polymère de l'exemple 9 + 1 ppm Cu + 5 ppb Ag | 0,2 |

EXEMPLE XIV

Souche bactérienne : Escherichia coli ATCC 11229 Concentration initiale en germes bactériens : $79,5.10^4$ germes par ml Polymère d'ammonium de l'exemple 9.

| Vitesse de destruction des germes bactériens | |
|---|---|
| Quantité et nature des ingrédients ajoutés à l'eau | % de bactéries restantes après 5 minutes |
| 1 ppm Cu | ~ 100 |
| 5 ppb Ag | ~ 100 |
| 5 ppm du polymère de l'exemple 9 | 4,47 |
| 5 ppm du polymère de l'exemple 9 + 1 ppm Cu + 5 ppb Ag | 0,48 |

EXEMPLE XV

Souche bactérienne : Escherichia coli ATCC 11229 Concentration initiale en germes bactériens : $98.10^4$ germes par ml Polymère d'ammonium des exemples 10 et 13.

| Vitesse de destruction des germes bactériens | | | |
|---|---|---|---|
| Quantité et nature des ingrédients ajoutés à l'eau | % de bactéries restantes après | | |
| | 30 secondes | 1 minute | 5 minutes |
| 5 ppm du polymère de l'exemple 10 + 1 ppm Cu + 5 ppb Ag | 0,99 | 0,11 | 0,002 |
| 5 ppm du polymère de l'exemple 13 + 1 ppm Cu + 5 ppb Ag | 23,5 | 7,09 | 0,27 |

Le polymère de l'exemple 10 ne diffère de celui de l'exemple 13 que du point de vue de son degré de polymérisation.
L'action bactéricide est d'autant plus importante que le degré de polymérisation est élevé.

EXEMPLE XVI

Souche bactérienne : Staphylococcus aureus ATCC 6538 Concentration initiale en germes bactériens : 81,5.$10^4$ germes par ml Polymère d'ammonium de l'exemple 24.

| Vitesse de destruction des germes bactériens | |
|---|---|
| Quantité et nature des ingrédients ajoutès à l'eau | % de bactéries restantes après 5 minutes |
| 1 ppm Cu | ~ 100 |
| 5 ppb Ag | ~ 100 |
| 10 ppm du polymère de l'exemple 24 | 0,25 |
| 10 ppm du polymère de l'exemple 24 1 ppm Cu + 5 ppb Ag | + 0,048 |

EXEMPLE XVII

Souche bactérienne : Staphylococcus aureus ATCC 6538 Concentration initiale en germes bactériens : 81,5.$10^4$ germes par ml Polymère d'ammonium de l'exemple 30.

| Vitesse de destruction des germes bactériens | |
|---|---|
| Quantité et nature des ingrédients ajoutés à l'eau | % de bactéries restantes après 5 minutes |
| 1 ppm Cu | ~ 100 |
| 5 ppb Ag | ~ 100 |
| 10 ppm du polymère de l'exemple 30 | 0,54 |
| 10 ppm du polymère de l'exemple 30 + 1 ppm Cu + 5 ppb Ag | 0,067 |

EXEMPLE XVIII

Souche bactérienne : Escherichia coli ATCC 11229 Concentration initiale en germes bactériens : 81,5.$10^4$ germes par ml Polymère d'ammonium de l'exemple 23.

| Vitesse de destruction des germes bactériens | | |
|---|---|---|
| Quantité et nature des ingrédients ajoutés à l'eau | % de bactéries restantes après | |
| | 1 minute | 5 minutes |
| 1 ppm Cu | ~ 100 | - |
| 5 ppb Ag | ~ 100 | - |
| 10 ppm du polymère de l'exemple 23 | 4,6 | 0,85 |
| 10 ppm du polymère de l'exemple 23 + 1 ppm Cu + 5 ppb Ag | 0,5 | 0,004 |

EXEMPLE XIX

Souche bactérienne : Escherichia coli ATCC 11229 Concentration initiale en germes bactériens : 81,5.$10^4$ germes par ml Polymère d'ammonium de l'exemple 25.

| Vitesse de destruction des germes bactériens | | |
|---|---|---|
| Quantité et nature des ingrédients ajoutés à l'eau | % de bactéries restantes après | |
| | 1 minute | 5 minutes |
| 1 ppm Cu | ~ 100 | - |
| 5 ppb Ag | ~ 100 | - |
| 10 ppm du polymère de l'exemple 25 | 3,36 | 0,18 |
| 10 ppm du polymère de l'exemples 25 + 1 ppm Cu + 5 ppb Ag | 0,026 | 0,000 |

EXEMPLES XX

Souche bactérienne : Saccharomyces cerevisiae Concentration initiale en germes bactériens : 12,6.$10^4$ germes par ml Polymère d'ammonium de l'exemple 10.

| Vitesse de destruction des germes bactériens | | |
|---|---|---|
| Quantité et nature des ingrédients ajoutés à l'eau | % de bactéries | restantes après |
| | 1 minute | 5 minutes |
| 1 ppm Cu | ~ 100 | ~ 100 |
| 5 ppb Ag | ~ 100 | ~ 100 |
| 5 ppm du polymère de l'exemple 10 | 15,20 | 1,31 |
| 5 ppm du polymère de l'exemple 10 + 1 ppm Cu + 5 ppb Ag | 4,98 | 0,02 |

EXEMPLE XXI

Souche bactérienne : Candida albicans Concentration initiale en germes bactériens : 7,4.$10^4$ germes par ml Polymère d'ammonium de l'exemple 10.

| Vitesse de destruction des germes bactériens | | |
|---|---|---|
| Quantité et nature des ingrédients ajoutés à l'eau | % de bactéries | restantes après |
| | 1 minute | 5 minutes |
| 1 ppm Cu | ~ 100 | ~ 100 |
| 10 ppb Ag | ~ 100 | ~ 100 |
| 10 ppm du polymère de l'exemple 10 | 13,17 | 1,75 |
| 10 ppm du polymère de l'exemple 10 + 1 ppm Cu + 10 ppb Ag | 4,12 | 0,09 |

EXEMPLE XXII

Souche bactérienne : Streptococcus faecalis ATCC 6569 Concentration initiale en germes bactériens : 115.$10^4$ germes par ml Polymère d'ammonium de l'exemple, 22, 23 ou 25.

| Vitesse de destruction des germes bactériens | | |
|---|---|---|
| Quantité et nature des ingrédients ajoutés à l'eau | % de bactéries restantes après | |
| | 1 minute | 5 minutes |
| 10 ppm du polymère de l'exemple 22 | 0,37 | 0,03 |
| 10 ppm du polymère de l'exemple 22 + 1 ppm Cu + 5 ppb Ag | 0,04 | 0,004 |
| 10 ppm du polymère de l'exemple 23 | 0,23 | 0,078 |
| 10 ppm du polymère de l'exemple 23 + 1 ppm Cu + 5 ppb Ag | 0,20 | 0,002 |
| 10 ppm du polymère de l'exemple 25 | 0,86 | 0,15 |
| 10 ppm du polymère de l'exemple 25 + 1 ppm Cu + 5 ppb Ag | 0,26 | 0,0001 |

EXEMPLE XXIII

Traitement par le polymère d'ammonium de l'exemple 10 d'une huile de coupe contenant de multiples microorganismes et provenant de l'industrie automobile.

| Vitesse de destruction des germes bactériens | | |
|---|---|---|
| Quantité et nature des ingrédients ajoutés à l'eau | % de bactéries restantes après | |
| | 15 minutes | 1 heure |
| 1000 ppm du polymère de l'exemple 10 + 10 ppm Cu | 5,4 | 0,00 |
| 1000 ppm du polymère de l'exemple 10 + 10 ppm Mn | 2,5 | 0,05 |

EXEMPLE XXIV

Traitement par le polymère d'ammonium de l'exemple 22 d'une huile de coupe contenant de multiples microorganismes et provenant de l'industrie automobile.

| Vitesse de destruction des germes bactériens | | |
|---|---|---|
| Quantité et nature des ingrédients ajoutés à l'eau | % de bactéries restantes après | |
| | 15 minutes | 1 heure |
| 1000 ppm du polymère de l'exemple 22 + 10 ppm Cu | 0,05 | 0,00 |
| 1000 ppm du polymère de l'exemple 22 + 10 ppm Mn | 0,54 | 0,05 |

EXEMPLE XXV

Souche bactérienne : Saccharomyces cerevisiae Concentration initiale en germes bactériens : $4{,}3.10^4$ germes par ml

Traitement d'une suspension de Saccharomyces cerevisiae simultanément par le polymère d'ammonium de l'exemple 10, des ions cuivre et argent et un surfactant non ionique (du type alcool gras polyoxyéthyléné).

| Vitesse de destruction des germes bactériens | | |
|---|---|---|
| Quantité et nature des ingrédients ajoutés à l'eau | % de bactéries restantes après | |
| | 1 minute | 5 minutes |
| 10 ppm du polymère de l'exemple 10 + 1 ppm Cu + 5 ppb Ag | 0,020 | 0,000 |
| 10 ppm du polymère de l'exemple 10 + 250 ppm de surfactant + 1 ppm Cu + 5 ppb Ag | 0,010 | 0,000 |

EXEMPLE XXVI

Traitement par le polymère d'ammonium de l'exemple 10, en présence d'ions cuivre et/ou manganèse, d'une suspension de Lactobacillus Bulgaris prélevée du sérum surnageant d'un yaourt.

| Vitesse de destruction des germes bactériens | | |
|---|---|---|
| Quantité et nature des ingrédients ajoutés à l'eau | % de bactéries | restantes après |
| | 1 minute | 5 minutes |
| 10 ppm du polymère de l'exemple 10 + 1 ppm Cu | 11,1 | 0,53 |
| 10 ppm du polymère de l'exemple 10 + 1 ppm Mn | 4,96 | 0,84 |
| 10 ppm du polymère de l'exemple 10 + 1 ppm Mn + 1 ppm Cu | 4,27 | 0,47 |

**Revendications**

**1.** Composition désinfectante contenant, comme ingrédients actifs, au moins un polymère d'ammonium quaternaire et des ions d'au moins un métal choisi parmi le cuivre, l'argent et le manganèse, caractérisée en ce qu'elle contient comme polymère d'ammonium quaternaire au moins un polymère ou copolymère obtenu par condensation d'au moins une amine tertiaire difonctionnelle répondant à l'une ou l'autre des formules (I), (II) et (III) suivantes :

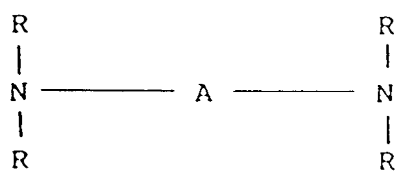

(I)

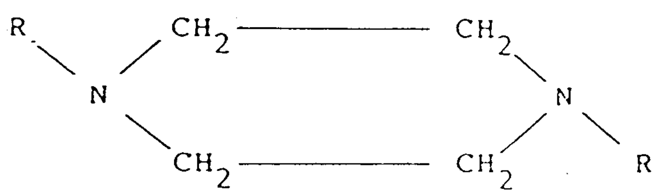

(II)

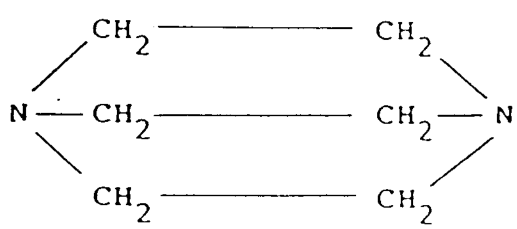

(DABCO) (III)

avec au moins un dihalogénure organique répondant à la formule (IV) suivante :

X—B—X (IV)

dans lesquelles formules (I), (II), (III) et (IV), les symboles R, A, B et X ont les significations suivantes :
R désigne un radical alkyle inférieur ou le radical $-CH_2-CH_2-OH$ ;

X désigne un atome d'halogène, de préférence un atome de chlore ou de brome, et

A et B, qui peuvent être identiques ou différents, répondent à l'une ou l'autre des cinq formules suivantes :

(1)

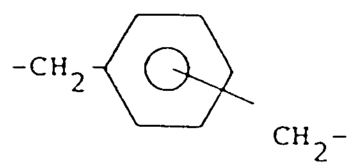

où l'un des substituants $-CH_2-$ peut être en position ortho, méta ou para,

(2)

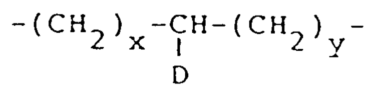

où D désigne de l'hydrogène ou un radical alkyle contenant moins de quatre atomes de carbone, et x et y sont des nombres entiers inférieurs à 5 dont l'un peut avoir une valeur égale à 0, tandis que la somme x + y est au moins égale à 1 et au maximum égale à 10,

le radical (2) pouvant contenir au maximum deux doubles liaisons,

(3)

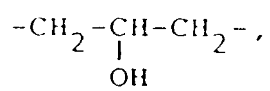

(4) $-(CH_2)_n-O-(CH_2)-$

où n est égal à 2 ou 3, et

(5)

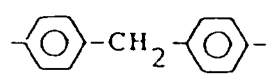

la somme des atomes de carbone contenus dans A et B, lorsque A et a sont présents, etant comprise entre 9 et 14.

**2.** Composition désinfectante suivant la revendication 1, caractérisée en ce qu'elle contient au moins un composé hydrosoluble capable de libérer au moins un ion de métal choisi parmi le cuivre, l'argent et le manganèse.

3. Composition désinfectante suivant la revendication 1, caractérisée en ce qu'elle contient comme polymère d'ammonium quaternaire un polymère de formule (V) suivante :

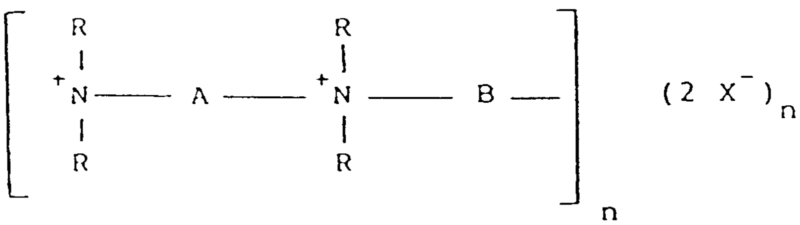

(V)

dans laquelle R, A, B et X ont les significations données plus haut, tandis que n indique le degré de polymérisation.

4. Composition suivant la revendication 3, caractérisée en ce que, dans le polymère de formule (V), la somme des atomes de carbone contenus dans A et B est égale à 9 ou 10.

5. Composition désinfectante suivant la revendication 1, caractérisée en ce qu'elle contient comme polymère d'ammonium quaternaire un polymère de formule (VI) suivante :

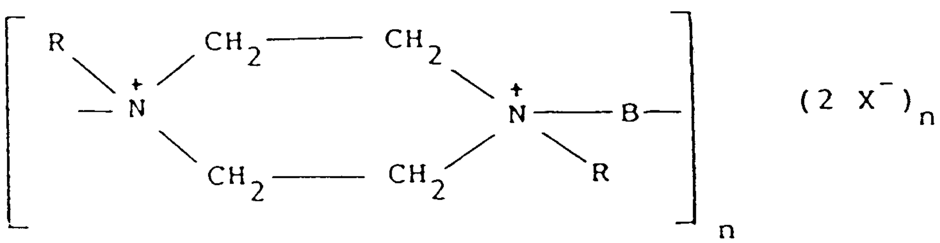

(VI)

dans laquelle A, X, B et n ont les significations données plus haut.

6. Composition désinfectante suivant la revendication 1, caractérisée en ce qu'elle contient comme polymère d'ammonium quaternaire un polymère de formule (VII) suivante :

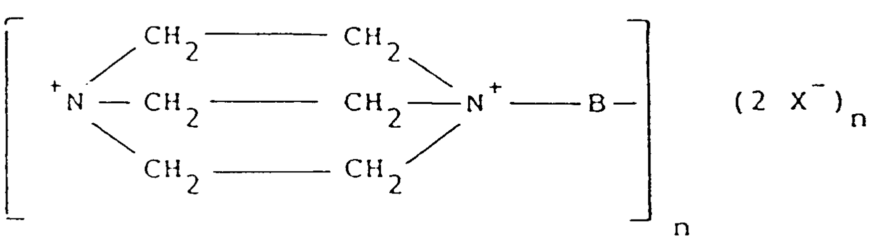

(VII)

dans laquelle B, X et n ont les significations données plus haut.

7. Composition désinfectante suivant la revendication 1, caractérisée en ce qu'elle contient comme ingrédient actif au moins un copolymère d'ammonium quaternaire formé par condensation d'au moins deux amines tertiaires difonctionnelles de formule (I), (II) et/ou (III) avec un dihalogénure organique de formule (IV).

8. Composition désinfectante suivant la revendication 1, caractérisée en ce qu'elle contient comme ingrédients actifs au moins un des polymères et copolymères d'ammonium quaternaire suivants :

- un polymère de formule (V) dans laquelle

$R = -CH_3$, $A = (CH_2)_2$,

B = 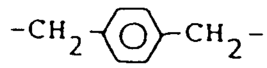 et X = Br ;

ou

R = $-CH_3$, A = $(CH_2)_3$,

B = 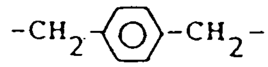 et X = Br ;

ou

R = $-CH_3$, A = $-CH_2-CH=CH-CH_2-$,

B = 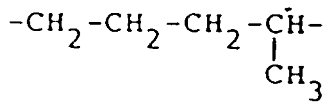 et X = Br ;

ou

- un polymère de formule (VI) dans laquelle

R = $-CH_3$, X = Br et B = $-CH_2-CH=CH-CH_2-$ ; ou

R = $-CH_3$, X = Br et

B = 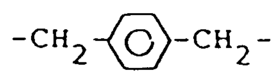 ;

- un polymère de formule (VII) dans laquelle

B = $(CH_2)_3$ et X = Br ; ou

B = 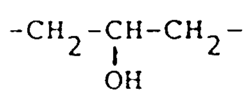 et X = Br ;

ou

B = $(CH_2)_5$ et X = Br ; ou

B = $(CH_2)_4$ et X = Br ; ou

B = $-CH_2-CH=CH-CH_2-$ et X = Br ; ou

B = $-CH_2-CH_2-O-CH_2-CH_2-$ et X = Br ; ou

B = $(CH_2)_6$ et X = Br ; ou

B = $(CH_2)_8$ et X = Br ; ou

B = $(CH_2)_{10}$ et X = Br ; ou

B = 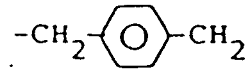 et X = Br ;

- un copolymère d'ammonium quaternaire formé par condensation d'amines tertiaires difonctionnelles avec un dihalogénure, où
  - les amines sont du DABCO (le produit de formule (III)) et de la N,N'-diméthylpipérazine et le dihalogénure est du 1,3-dibomopropane ; ou
  - les amines sont de la N,N,N',N'-tétraméthyl-2-butène-1,4-diamine et de la N,N'-diméthylpipèrazine et le dihalogénure est du 1,4-dichloro-2-butène ; ou
  - les amines sont de la N,N,N',N'-tétraméthyl-2-butène-1,4-diamine et du DABCO (le produit de formule (III)) et le dihalogénure est du 1,4-dichloro-2-butène ; ou
  - les amines sont de la N,N,N',N'-tétraméthylhexane diamine et du DABCO et le dihalogénure est du 1,5-dibromopentane.

**9.** Composition désinfectante suivant la revendication 3, caractérisée en ce qu'elle contient comme polymère d'ammonium quaternaire un polymère de formule (V) dans laquelle R désigne $CH_3$, A désigne $(CH_2)_6$, B désigne $(CH_2)_3$ et X désigne Br.

**10.** Procédé de désinfection de liquides, en particulier d'eau, d'huiles ou de surfaces infectées, dans lequel on traite celles-ci à l'aide d'au moins un polymère ou copolymère d'ammonium quaternaire et à l'aide d'au moins un ion de métal choisi parmi le cuivre, l'argent et le manganèse, caractérisé en ce qu'on utilise, comme polymère d'ammonium quaternaire, au moins un polymère ou copolymère obtenu par condensation d'au moins une amine tertiaire difonctionnelle répondant à l'une ou l'autre des formules (I), (II) et (III) suivantes :

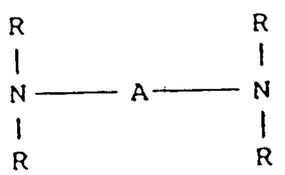

(I)

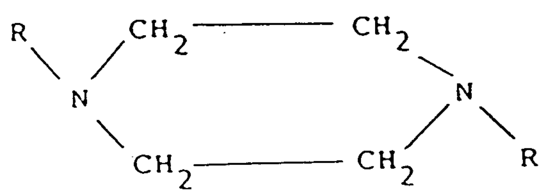

(II)

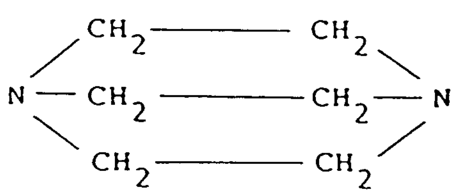

(DABCO) (III)

avec au moins un dihalogénure organique répondant à la formule (IV) suivante :

X—B—X (IV)

dans lesquelles formules (I), (II), (III) et (IV), les symboles R, A, B et X ont les significations suivantes :

R désigne un radical alkyle inférieur ou le radical $-CH_2-CH_2-OH$ ;

X désigne un atome d'halogène, de préférence un atome de chlore ou de brome, et

A et B, qui peuvent être identiques ou différents, répondent à l'une ou l'autre des cinq formules suivantes :

(1)

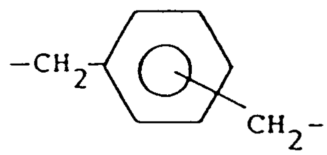

où l'un des substituants $-CH_2-$ peut être en position ortho, méta ou para,

(2)

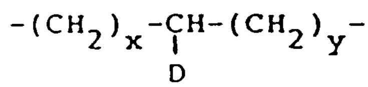

où D désigne de l'hydrogène ou un radical alkyle contenant moins de quatre atomes de carbone, et x et y sont des nombres entiers inférieurs à 5 dont l'un peut avoir une valeur égale à 0, tandis que la somme x + y est au moins égale à 1 et au maximum égale à 10, le radical (2) pouvant contenir au maximum deux doubles liaisons,

(3)

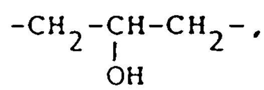

(4) $-(CH_2)_n-O-(CH_2)_n-$

où n est égal à 2 ou 3, et

(5)

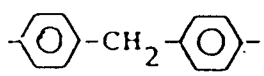

la somme des atomes de carbone contenus dans A et B, lorsque A et B sont présents etant comprise entre 9 et 14.

**11.** Procédé suivant la revendication 9, appliqué à la désinfection de l'eau, caractérisé en ce qu'on utilise un polymère ou copolymère d'ammonium quaternaire choisi parmi ceux définis dans la revendication 8 à raison de 0,5 à 5 ppm de l'eau à désinfecter.

**12.** Procédé suivant la revendication 11, caractérisé en ce qu'on utilise des ions de cuivre à raison de 0,5 à 5 ppm de l'eau à désinfecter.

**13.** Procédé suivant la revendication 11, caractérisé en ce qu'on utilise des ions d'argent à raison de 1 à 50 ppb de l'eau à désinfecter.

**14.** Procédé suivant la revendication 11, caractérisé en ce que les ions du ou des métaux sont fournis par électrolyse ou par addition à l'eau d'un sel hydrosoluble de ce métal ou de ces métaux.

**15.** Procédé suivant la revendication 11, caractérisé en ce qu'il contient au moins un polymère et/ou copolymère d'ammonium quaternaire défini dans la revendication 1, ainsi qu'au moins un composé hydrosoluble capable de libérer des ions d'au moins un métal choisi parmi le cuivre, l'argent ou le manganèse.

**16.** Procédé de désinfection suivant la revendication 10, caractérisé en ce qu'on utilise comme polymère d'ammonium quaternaire un polymère de formule (V) suivante :

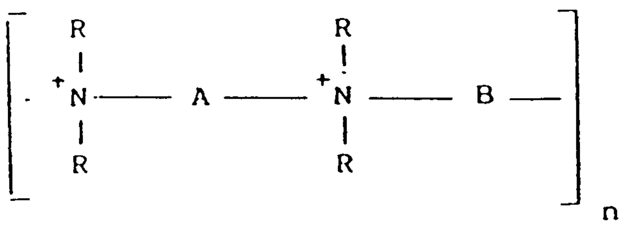 $(2\ X^-)_n$ (V)

dans laquelle R, A, B et X ont les significations données plus haut, tandis que n indique le degré de polymérisation.

**17.** Procédé de désinfection suivant la revendication 16, caractérisé en ce qu'on utilise un polymère de formule (V) dans laquelle la somme des atomes de carbone contenus dans A et a est égale à 9 ou 10.

**18.** Procédé de désinfection suivant la revendication 10, caractérisé en ce qu'on utilise comme polymère d'ammonium quaternaire un polymère de formule (VI) suivante:

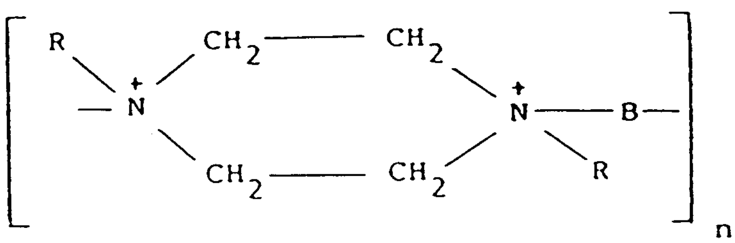 $(2\ X^-)_n$ (VI)

dans laquelle R, X, B et n ont les significations données plus haut.

**19.** Procédé de désinfection suivant la revendication 10,caractérisé en ce qu'on utilise comme polymère d'ammonium quaternaire un polymère de formule (VII) suivante :

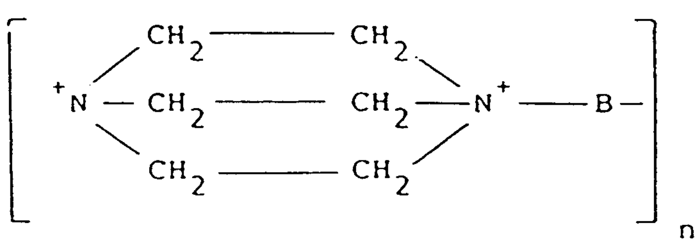 $(2\ X^-)_n$ (VII)

dans laquelle B, X et n ont les significations données plus haut.

**20.** Procédé de désinfection suivant la revendication 10, caractérisé en ce qu'on utilise comme ingrédients actifs un copolymère d'ammonium quaternaire formé par condensation d'au moins deux amines tertiaires difonctionnelles de formule (I), (II) et/ou (III) avec un dihalogénure organique de formule (IV).

**21.** Procédé de désinfection suivant la revendication 10, caractérisé en ce qu'on utilise comme ingrédients actifs au moins un polymère ou copolymère d'ammonium quaternaire choisi parmi les suivants :

- un polymère de formule (V) dans laquelle

  R = $-CH_3$, A = $(CH_2)_2$,

  B = 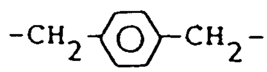 et X = Br ;

  ou

  R = $-CH_3$, A = $(CH_2)_3$,

  B = 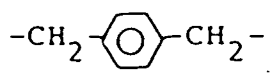 et X = Br ;

  ou

  R = $-CH_3$, A = $-CH_2-CH=CH-CH_2-$,

  B = 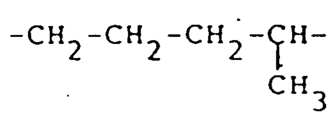 et X = Br ;

  ou
- un polymère de formule (VI) dans laquelle

  R = $-CH_3$, X = Br et B = $-CH_2-CH=CH-CH_2-$ ; ou

  R = $-CH_3$, X = Br et

  B = 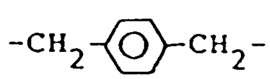 ;

- un polymère de formule (VII) dans laquelle

  B = $(CH_2)_3$ et X = Br ; ou

  B = 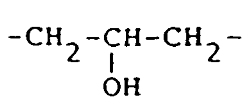 et X = Br ;

  ou

  B = $(CH_2)_5$ et X = Br ; ou

  B = $(CH_2)_4$ et X = Br ; ou

  B = $-CH_2-CH=CH-CH_2-$ et X = Br ; ou

  B = $-CH_2-CH_2-O-CH_2-CH_2-$ et X = Br ; ou

  B = $(CH_2)_6$ et X = Br ; ou

B = $(CH_2)_8$ et X = Br ; ou

B = $(CH_2)_{10}$ et X = Br ; ou

B = 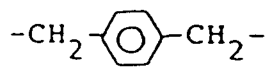 et X = Br ;

- un copolymère d'ammonium quaternaire formé par condensation d'amines tertiaires difonctionnelles avec un dihalogénure, où
  - les amines sont du DABCO (le produit de formule (III)) et de la N,N'-diméthylpipérazine et le dihalogénure est du 1,3-dibromopropane ; ou
  - les amines sont de la N,N,N',N'-tétraméthyl-2-butène-1,4-diamine et de la N,N'-diméthylpipérazine et le dihalogénure est du 1,4-dichloro-2-butène ; ou
  - les amines sont de la N,N,N',N'-tetraméthyl-2-butène-1,4-diamine et du DABCO (le produit de formule (III)) et le dihalogénure est du 1,4-dichloro-2-butène ; ou
  - les amines sont de la N,N,N',N'-tétraméthylhexane diamine et du DABCO et le dihalogénure est du 1,5-dibromopentane.

**22.** Procédé de désinfection suivant la revendication 16, caractérisé en ce qu'on utilise comme polymère d'ammonium quaternaire un polymère de formule (V) dans laquelle R désigne $CH_3$, A désigne $(CH_2)_6$, B désigne $(CH_2)_3$ et X désigne Br.

## Claims

**1.** Disinfectant composition containing, as active ingredients, at least one ammonium quaternary polymer and ions of at least one metal selected among copper, silver and manganese, characterized in that it contains as ammonium quaternary polymer, at least one polymer or copolymer obtained by condensation of at least one difunctional tertiary amine having one of the following formulae (I), (II) and (III) :

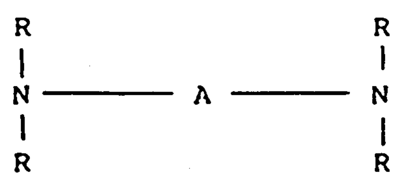

(I)

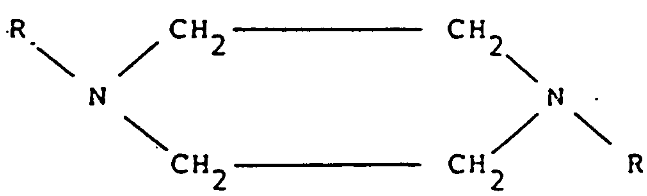

(II)

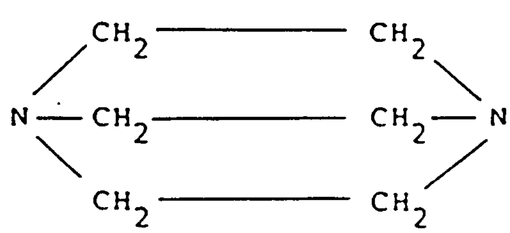

(DABCO) (III)

with at least one organic dihalide having the following formula (IV) :

X—B—X (IV)

in which formulae (I), (II), (III) and (IV), the symbols R, A, B and X have the following meanings :

R designates a lower alkyl radical or the radical $-CH_2-CH_2-OH$ ;

X designates a halogen atom, preferably a chlorine or bromine atom, and

A and B, which may be identical or different, have one of the five following formulae :

(1)

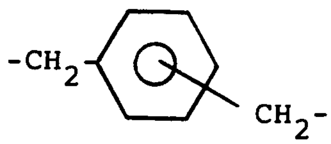

in which one of the substituents $-CH_2-$ may be in an ortho, meta or para position,

(2)

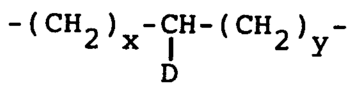

where D designates hydrogen or an alkyl radical containing less than four carbon atoms, and x and y are integers lower than 5, one of which may have a value equal to 0, while the sum x + y is at least equal to 1 and at most equal to 10,

the radical (2) containing at most two double bonds,

(3)

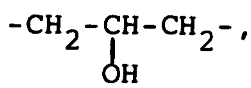

(4) $-(CH_2)_n-O-(CH_2)_n-$ in which n is equal to 2 or 3,

and

(5)

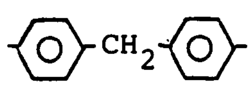

the sum of carbon atoms contained in A and B, when A and B are present, being comprised between 9 and 14.

**2.** Disinfectant composition according to claim 1, characterized in that it contains at least one water-soluble compound which is able to release at least one ion of a metal selected among copper, silver and manganese.

3. Disinfectant composition according to claim 1, characterized in that it contains, as ammonium quaternary polymer, a polymer of the following formula (V):

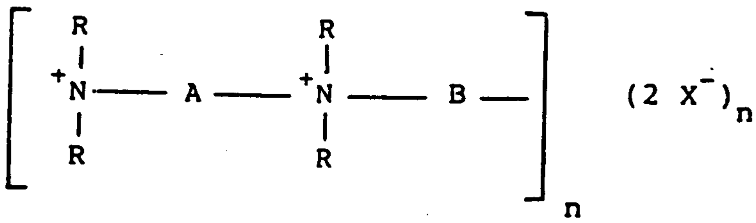

(V)

in which R, A, B and X have the above meanings, while n designates the degree of polymerization.

4. Composition according to claim 3, characterized in that, in the polymer of formula (V), the sum of carbon atoms in A and B is equal to 9 or 10.

5. Disinfectant composition according to claim 1, characterized in that it contains, as ammonium quaternary polymer, a polymer of the following formula (VI):

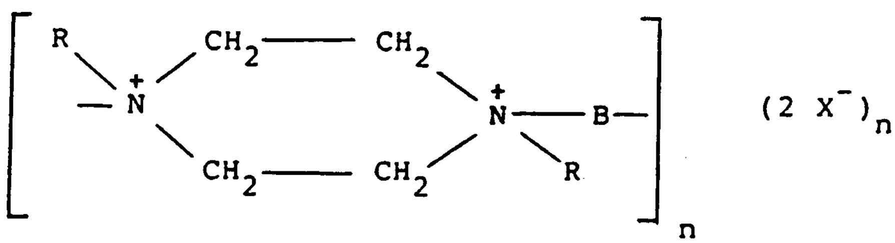

(VI)

in which R, X, B and n have the above meanings.

6. Disinfectant composition according to claim 1, characterized in that it contains, as ammonium quaternary polymer, a polymer of the following formula (VII):

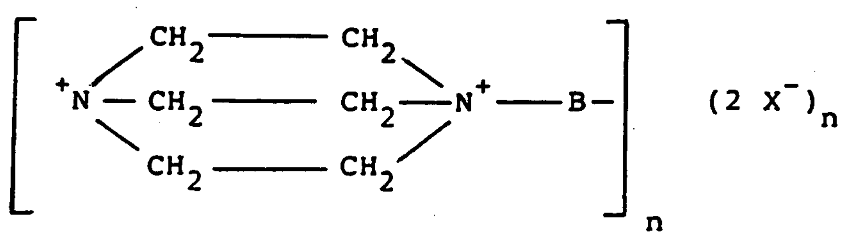

(VII)

in which B, X and n have the above meanings.

7. Disinfectant composition according to claim 1, characterized in that it contains as active ingredient at least one ammonium quaternary copolymer obtained by condensation of at least two difunctional tertiary amines of the formula (I), (II) and/or (III) with an organic dihalide of the formula (IV).

8. Disinfectant composition according to claim 1, characterized in that it contains as active ingredients at least one of the following ammonium quaternary polymers or copolymers :

- a polymer of formula (V) in which

$R = -CH_3$, $A = (CH_2)_2$,

B = 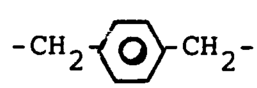 and X = Br ;

or

R = $-CH_3$, A = $(CH_2)_3$,

B = 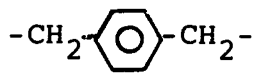 and X = Br ;

or

R = $-CH_3$, A = $-CH_2-CH=CH-CH_2-$,

B = 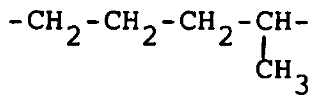 and X = Br ;

or

- a polymer of formula (VI) in which

  R = $-CH_3$, X = Br and B = $-CH_2-CH=CH-CH_2-$ ; or

  R = $-CH_3$, X = Br and

  B = 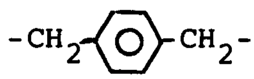 ;

- a polymer of formula (VII) in which

  B = $(CH_2)_3$ and X = Br ; or

  B = 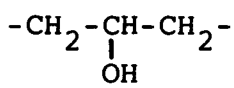

  and x = Br ; or

  B = $(CH_2)_5$ and X = Br ; or

  B = $(CH_2)_4$ and X = Br ; or

  B = $-CH_2-CH=CH-CH_2-$ and X = Br ; or

  B = $-CH_2-CH_2-O-CH_2-CH_2-$ and X = Br ; or

  B = $(CH_2)_6$ and X = Br ; or

  B = $(CH_2)_8$ and X = Br ; or

  B = $(CH_2)_{10}$ and X = Br ; or

  B = 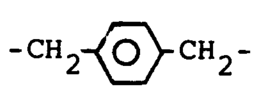 and X = Br ;

- an ammonium quaternary copolymer obtained by condensation of difunctional tertiary amines with a dihalide, where
  - the amines are DABCO (the product of the formula (III)) and N,N'-dimethylpiperazine and the dihalide is 1,3-dibromopropane ; or
  - the amines are N,N,N',N'-tetramethyl-2-butene-1,4-diamine and N,N'-dimethylpiperazine and the dihalide is 1,4-dichloro-2-butene ; or
  - the amines are N,N,N',N'-tetramethyl-2-butene-1,4-diamine and DABCO (the product of the formula (III)) and the dihalide is 1,4-dichloro-2-butene ; or
  - the amines are N,N,N',N'-tetramethylhexanediamine and DABCO and the dihalide is 1,5-dibromopentane.

**9.** Disinfectant composition according to claim 3, characterized in that it contains, as ammonium quaternary polymer, a polymer of formula (V) in which R designates $CH_3$, A designates $(CH_2)_6$, B designates $(CH_2)_3$ and X designates Br.

**10.** Process of disinfection of liquids, particularly of water, oils or of infected surfaces, in which these liquids or surfaces are treated by means of at least one ammonium quaternary polymer or copolymer and by means of at least one ion of a metal selected among copper, silver and manganese, characterized in that at least one polymer or copolymer obtained by condensation of at least one difunctional tertiary amine having one of the following formulae (I), (II) and (III) :

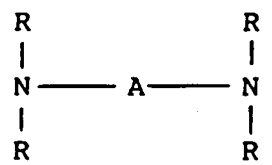

(I)

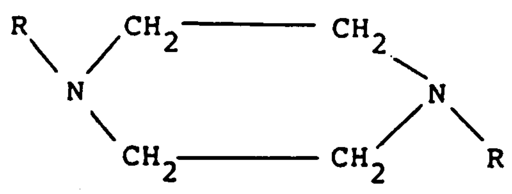

(II)

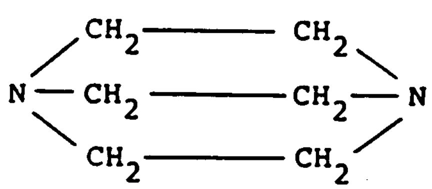

(DABCO) (III)

with at least one organic dihalide having the following formula (IV) :

X—B—X (IV)

in which formulae (I), (II), (III) and (IV), the symbols R, A, B and X have the following meanings :

| | |
|---|---|
| R | designates a lower alkyl radical or the radical $-CH_2-CH_2-OH$ ; |
| X | designates a halogen atom, preferably a chlorine or bromine atom, and |
| A and B, | which may be identical or different, have one of the five following formulae : |

(1)

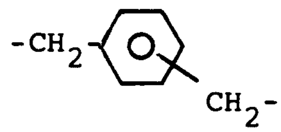

in which one of the substituents $-CH_2-$ may be in an ortho, meta or para position,

(2)

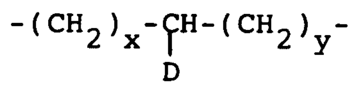

where D designates hydrogen or an alkyl radical containing less than four carbon atoms, and x and y are integers lower than 5, one of which may have a value equal to 0, while the sum x + y is at least equal to 1 and at most equal to 10,

the radical (2) containing at most two double bonds,

(3)

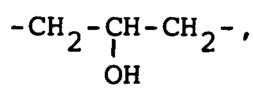

(4) $-(CH_2)_n-O-(CH_2)_n-$ in which n is equal to 2 or 3,

and

(5)

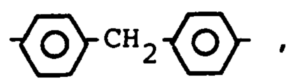

the sum of carbon atoms contained in A and B, when A and B are present, being comprised between 9 and 14,

is used as ammonium quaternary polymer.

**11.** Process according to claim 9, applied to the disinfection of water, characterized in that an ammonium quaternary polymer or copolymer selected among those defined in claim 8 is used in a proportion of 0.5 to 5 ppm of the water to be disinfected.

**12.** Process according to claim 11, characterized in that copper ions are used in a proportion of 0.5 to 5 ppm of the water to be disinfected.

**13.** Process according to claim 11, characterized in that silver ions are used in a proportion of 1 to 50 ppb of the water to be disinfected.

**14.** Process according to claim 11, characterized in that the ions of the metal or metals are supplied by electrolysis or by addition to the water of a water-soluble salt of this metal or these metals.

**15.** Process according to claim 11, characterized in that it contains at least one ammonium quaternary polymer and/or copolymer as defined in claim 1, as well as at least one water-soluble compound which is able to release ions of at least one metal selected among copper, silver and manganese.

**16.** Disinfection process according to claim 10, characterized in that a polymer of the following formula (V) :

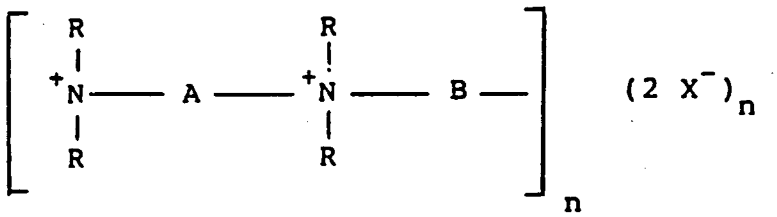

(V)

in which R, A, B and X have the above meanings, while n designates the degree of polymerization, is used as ammonium quaternary polymer.

**17.** Disinfection process according to claim 16, characterized in that a polymer of formula (V) in which the sum of carbon atoms contained in A and B is equal to 9 or 10 is used.

**18.** Disinfection process according to claim 10, characterized in that a polymer of the following formula (VI) :

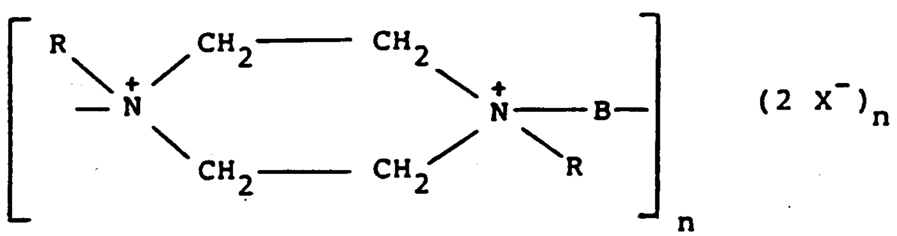

(VI)

in which R, X, B and n have the above meanings, is used as ammonium quaternary polymer.

**19.** Disinfection process according to claim 10, characterized in that a polymer of the following formula (VII) :

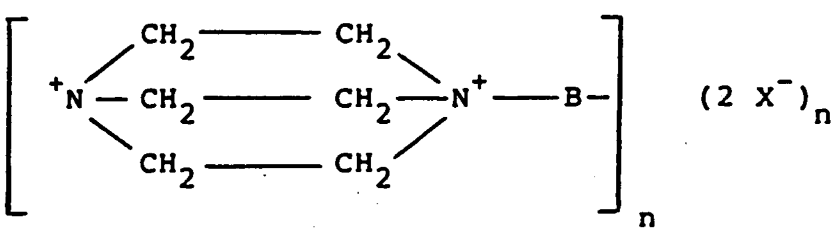

(VII)

in which B, X and n have the above meanings, is used as ammonium quaternary polymer.

**20.** Disinfection process according to claim 10, characterized in that one ammonium quaternary copolymer obtained by condensation of at least two difunctional tertiary amines of the formula (I), (II) and/or (III) with an organic dihalide of the formula (IV), is used as active ingredient.

**21.** Disinfection process according to claim 10, characterized in that at least one ammonium quaternary polymer or copolymer selected among the following :

- a polymer of formula (V) in which

  R = $-CH_3$, A = $(CH_2)_2$,

B = 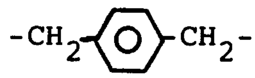 and X = Br ;

or

R = $-CH_3$, A = $(CH_2)_3$,

B = 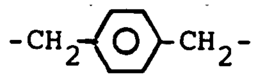 and X = Br ;

or

R = $-CH_3$, A = $-CH_2-CH=CH-CH_2-$,

B = 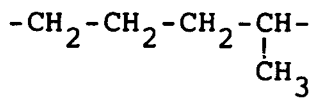 and X = Br ;

or

- a polymer of formula (VI) in which

R = $-CH_3$, X = Br and B = $-CH_2-CH=CH-CH_2-$ ; or

R = $-CH_3$, X = Br and

B = 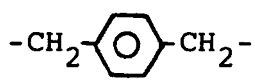 ;

- a polymer of formula (VII) in which

B = $(CH_2)_3$ and X = Br ; or

B = 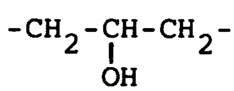 and X = Br ;

or

B = $(CH_2)_5$ and X = Br ; or

B = $(CH_2)_4$ and X = Br ; or

B = $-CH_2-CH=CH-CH_2-$ and X = Br ; or

B = $-CH_2-CH_2-O-CH_2-CH_2-$ and X = Br ; or

B = $(CH_2)_6$ and X = Br ; or

B = $(CH_2)_8$ and X = Br ; or

B = $(CH_2)_{10}$ and X = Br ; or

B = 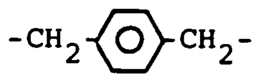 and X = Br ;

- an ammonium quaternary copolymer obtained by condensation of difunctional tertiary amines with a dihalide, where
  - the amines are DABCO (the product of the formula (III)) and N,N'-dimethylpiperazine and the dihalide is 1,3-dibromopropane ; or
  - the amines are N,N,N',N'-tetramethyl-2-butene-1,4-diamine and N,N'-dimethylpiperazine and the dihalide is 1,4-dichloro-2-butene ; or
  - the amines are N,N,N',N'-tetramethyl-2-butene-1,4-diamine and DABCO (the product of the formula (III)) and the dihalide is 1,4-dichloro-2-butene ; or
  - the amines are N,N,N',N'-tetramethylhexanediamine and DABCO and the dihalide is 1,5-dibromopentane,

  is used as active ingredient.

**22.** Disinfection process according to claim 16, characterized in that a polymer of formula (V) in which R designates $CH_3$, A designates $(CH_2)_6$, B designates $(CH_2)_3$ and X designates Br, is used as ammonium quaternary polymer.

**Patentansprüche**

**1.** Desinfektionsmittel, das als Wirkstoffe mindestens ein Polymer eines quaternären Ammoniums und Ionen mindestens eines Metalls, ausgewählt aus Kupfer, Silber und Mangan, enthält, dadurch gekennzeichnet, daß es als Polymer eines quaternären Ammoniums mindestens ein Polymer oder Copolymer enthält, das durch Kondensation mindestens eines tertiären difunktionellen Amins, das einer der folgenden Formeln (I), (II) und (III) entspricht:

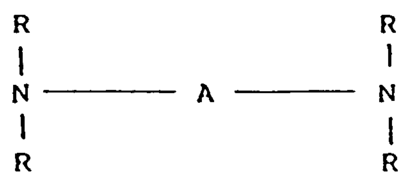

(I)

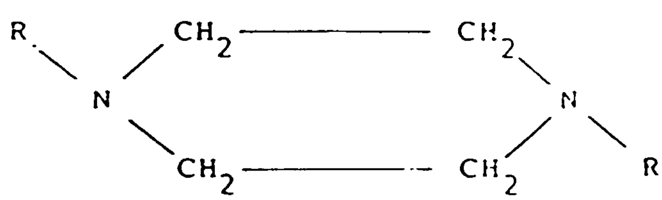

(II)

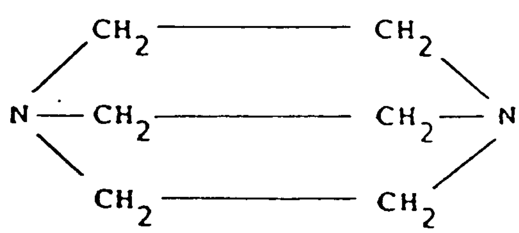

(DABCO) (III)

mit mindestens einem organischen Dihalogenid, das der folgenden Formel (IV) entspricht:

X—B—X (IV)

erhalten worden ist, wobei in den Formeln (I), (II), (III) und (IV) die Symbole R, A, B und X folgende Bedeutungen haben:

R bezeichnet einen niederen Alkylrest oder den Rest $-CH_2-CH_2-OH$;

X bezeichnet ein Halogenatom, vorzugsweise ein Chlor- oder Bromatom und

A und B, die gleich oder verschieden sein können, stehen für eine der folgenden fünf Formeln:

(1)

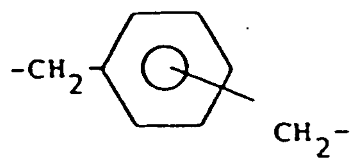

worin einer der Substituenten $-CH_2-$ in o-, m- oder p-Stellung stehen kann,

(2)

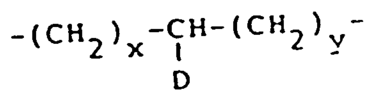

worin D Wasserstoff oder einen Alkylrest mit mindestens 4 Kohlenstoffatomen bedeutet und x und y ganze Zahlen kleiner 5 sind, von denen die eine einen Wert gleich 0 haben kann, während die Summe x + y mindestens gleich 1 und höchstens gleich 10 ist,

der Rest (2) maximal zwei Doppelbindungen enthalten kann,

(3)

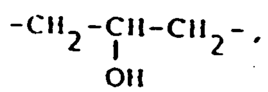

(4) $-(CH_2)_n-O-(CH_2)_n-$

worin n gleich 2 oder 3 ist und

(5)

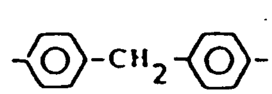

wobei die Summe der in A und B enthaltenen Kohlenstoffatome, wenn A und B vorhanden sind, im Bereich von 3 bis 14 liegt.

**2.** Desinfektionsmittel nach Anspruch 1, dadurch gekennzeichnet, daß es mindestens eine wasserlösliche Verbindung enthält, die mindestens ein Metallion, ausgewählt aus Kupfer, Silber und Mangan, freisetzen kann.

3. Desinfektionsmittel nach Anspruch 1, dadurch gekennzeichnet, daß es als Polymer eines quaternären Ammoniums ein Polymer der folgenden Formel (V)

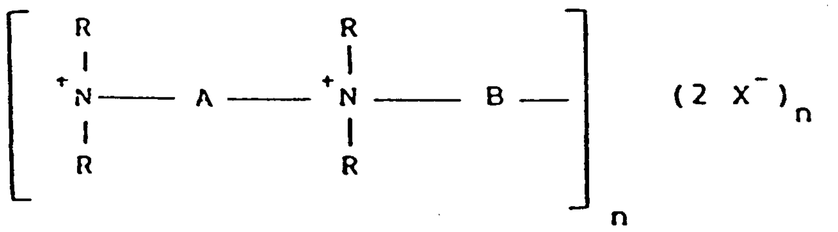

(V)

enthält, in der R, A, B und X die weiter oben angegebenen Bedeutungen haben, während n den Polymerisationsgrad angibt.

4. Mittel nach Anspruch 3, dadurch gekennzeichnet, daß in dem Polymer der Formel (V) die Summe der in A und B enthaltenen Kohlenstoffatome gleich 9 oder 10 ist.

5. Desinfektionsmittel nach Anspruch 1, dadurch gekennzeichnet, daß es als Polymer eines quaternären Ammoniums ein Polymer der folgenden Formel (VI) enthält:

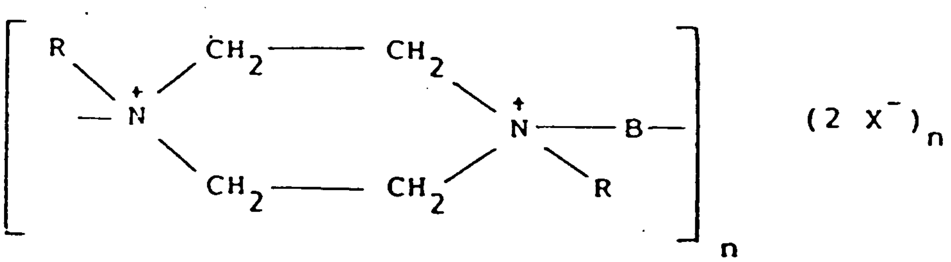

(VI)

in der R, X, B und n die weiter oben angegebenen Bedeutungen haben.

6. Desinfektionsmittel nach Anspruch 1, dadurch gekennzeichnet, daß es als Polymer eines quaternären Ammoniums ein Polymer der folgenden Formel (VII) enthält:

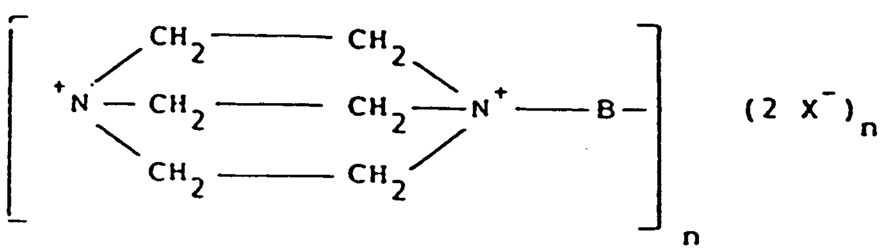

(VII)

in der B, X und n die weiter oben angegebenen Bedeutungen haben.

7. Desinfektionsmittel nach Anspruch 1, dadurch gekennzeichnet, daß es als Wirkstoff mindestens ein Copolymer eines quaternären Ammoniums enthält, das durch Kondensation von mindestens zwei tertiären difunktionellen Aminen der Formeln (I), (II) und/oder (III) mit einem organischen Dihalogenid der Formel (IV) erhalten worden ist.

8. Desinfektionsmittel nach Anspruch 1, dadurch gekennzeichnet, daß es als Wirkstoffe mindestens eines der folgenden Polymeren und Copolymeren eines quaternären Ammoniums enthält:

- ein Polymer der Formel (V), in der
  R = $-CH_3$, A = $(CH_2)_2$,

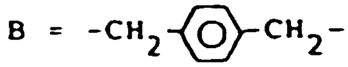 und X = Br ;

oder

R = $-CH_3$, A = $(CH_2)_3$,

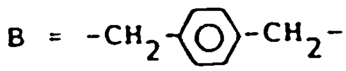 und X = Br ;

oder
R = $-CH_3$, A = $-CH_2-CH=CH-CH_2-$,

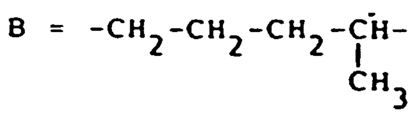 und X = Br ;

oder
- ein Polymer der Formel (VI), in der
  R = $-CH_3$, X = Br und B = $-CH_2-CH=CH-CH_2-$ ; oder

  R = $-CH_3$, X = Br und

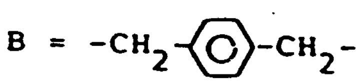 ;

- ein Polymer der Formel (VII), in der
  B = $(CH_2)_3$ und X = Br ; oder

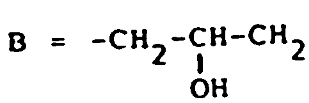 und X = Br ;

oder

B = $(CH_2)_5$ und X = Br ; oder

B = $(CH_2)_4$ und X = Br ; oder

B = $-CH_2-CH=CH-CH_2-$ und X = Br ; oder

B = $-CH_2-CH_2-O-CH_2-CH_2-$ und X = Br ; oder

B = $(CH_2)_6$ und X = Br ; oder

B = $(CH_2)_8$ und X = Br ; oder

B = $(CH_2)_{10}$ und X = Br ; oder

B = 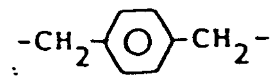 und X = Br ;

- ein Copolymer eines quaternären Ammoniums, gebildet durch Kondensation von tertiären difunktionellen Aminen mit einem Dihalogenid, worin
  - die Amine DABCO (das Produkt der Formel (III)) und N,N-Dimethylpiperazin sind und das Dihalogenid 1,3-Dibrompropan ist, oder
  - die Amine N,N,N',N'-Tetramethyl-2-buten-1,4-diamin und N,N-Dimethylpiperazin sind und das Dihalogenid 1,4-Dichlor-2-buten ist, oder
  - die Amine N,N,N',N'-Tetramethyl-2-buten-1,4-diamin und DABCO (das Produkt der Formel (III)) sind und das Dihalogenid 1,4-Dichlor-2-buten ist, oder
  - die Amine N,N,N',N'-Tetramethylhexandiamin und DABCO sind und das Dihalogenid 1,5-Dibrompentan ist.

**9.** Desinfektionsmittel nach Anspruch 3, dadurch gekennzeichnet, daß es als Polymer eines quaternären Ammoniums ein Polymer der Formel (V) enthält, in der R für $CH_3$ steht, A für $(CH_2)_6$ steht, B für $(CH_2)_3$ steht und X für Br steht.

**10.** Verfahren zum Desinfizieren von Flüssigkeiten, insbesondere von Wasser, infizierten Ölen oder infizierten Flächen, bei dem man diese mit mindestens einem Polymeren oder Copolymeren eines quaternären Ammoniums und mit mindestens einem Metallion, ausgewählt aus Kupfer, Silber und Mangan, behandelt, dadurch gekennzeichnet, daß man als Polymer eines quaternären Ammoniums mindestens ein Polymer oder Copolymer einsetzt, das durch Kondensation mindestens eines tertiären difunktionellen Amins, das einer der folgenden Formeln (I), (II) und (III) entspricht:

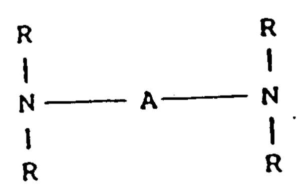

(I)

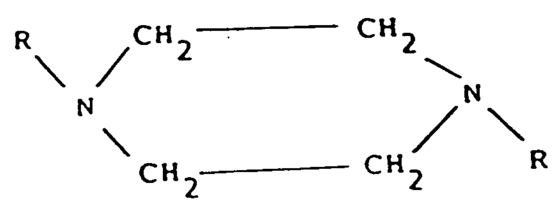

(II)

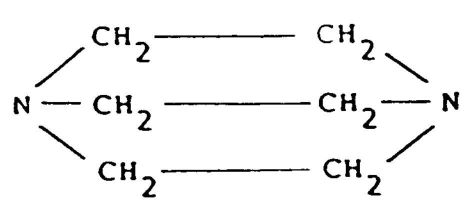

(DABCO) (III)

mit mindestens einem organischen Dihalogenid, das der folgenden Formel (IV) entspricht:

X—B—X (IV)

erhalten worden ist, wobei in den Formeln (I), (II), (III) und (IV) die Symbole R, A, B und X folgende Bedeutungen haben:

R bezeichnet einen niederen Alkylrest oder den Rest $-CH_2-CH_2-OH$;
X bezeichnet ein Halogenatom, vorzugsweise ein Chlor- oder Bromatom und
A und B, die gleich oder verschieden sein können, stehen für eine der folgenden fünf Formeln:
(1)

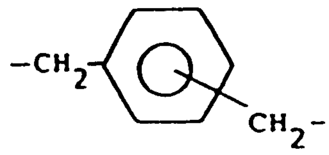

worin einer der Substituenten $-CH_2-$ in o-, m- oder p-Stellung stehen kann,
(2)

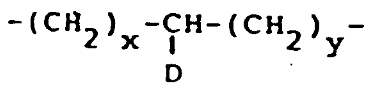

worin D Wasserstoff oder einen Alkylrest mit mindestens 4 Kohlenstoffatomen bedeutet und x und y ganze Zahlen kleiner 5 sind, von denen die eine einen Wert gleich 0 haben kann, während die Summe x + y mindestens gleich 1 und höchstens gleich 10 ist,
der Rest (2) maximal zwei Doppelbindungen enthalten kann,
(3)

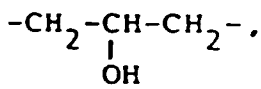

(4) $-(CH_2)_n-O-(CH_2)_n-$
worin n gleich 2 oder 3 ist und
(5)

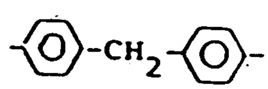

wobei die Summe der in A und B enthaltenen Kohlenstoffatome, wenn A und B vorhanden sind, im Bereich von 3 bis 14 liegt.

**11.** Verfahren nach Anspruch 9, angewandt zur Desinfektion von Wasser, dadurch gekennzeichnet, daß man ein Polymer oder Copolymer eines quaternären Ammoniums, ausgewählt aus den in Anspruch 8 genannten, in einer Menge von 0,5 bis 5 ppm einsetzt, bzogen auf das Wasser, das desinfiziert werden soll.

**12.** Verfahren nach Anspruch 11, dadurch gekennzeichnet, daß man Kupferionen in einer Menge von 0,5 bis 5 ppm, bezogen auf das Wasser, das desinfiziert werden soll, einsetzt.

**13.** Verfahren nach Anspruch 11, dadurch gekennzeichnet, daß man Silberionen in einer Menge von 1 bis 50 ppb, bezogen auf das Wasser, das desinfiziert werden soll, einsetzt.

**14.** Verfahren nach Anspruch 11, dadurch gekennzeichnet, daß die Ionen des Metalls oder der Metalle durch Elektrolyse oder durch Versetzen des Wassers mit einem wasserlöslichen Salz dieses Metalls oder dieser Metalle bereitgestellt werden.

**15.** Verfahren nach Anspruch 11, dadurch gekennzeichnet, daß es mindestens ein Polymer und/oder Copolymer eines quaternären Ammoniums, definiert im Anspruch 1, enthält, sowie mindestens eine wasserlösliche Verbindung, die Ionen mindestens eines Metalls, ausgewählt aus Kupfer, Silber oder Mangan, freisetzen kann.

**16.** Desinfektionsverfahren nach Anspruch 10, dadurch gekennzeichnet, daß man als Polymer eines quaternären Ammoniums ein Polymer der folgenden Formel (V) einsetzt:

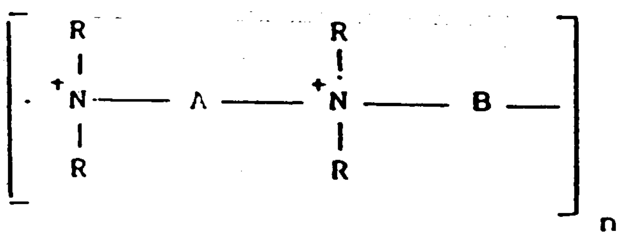 $(2\ X^-)_n$ (V)

in der R, A, B und X die weiter oben angegebenen Bedeutungen haben, während n den Polymerisationsgrad angibt.

**17.** Desinfektionsverfahren nach Anspruch 16, dadurch gekennzeichnet, daß man ein Polymer der Formel (V) einsetzt, in der die Summe der in A und B enthaltenen Kohlenstoffatome gleich 9 oder 10 ist.

**18.** Desinfektionsverfahren nach Anspruch 10, dadurch gekennzeichnet, daß man als Polymer eines quaternären Ammoniums ein Polymer der folgenden Formel (VI) einsetzt:

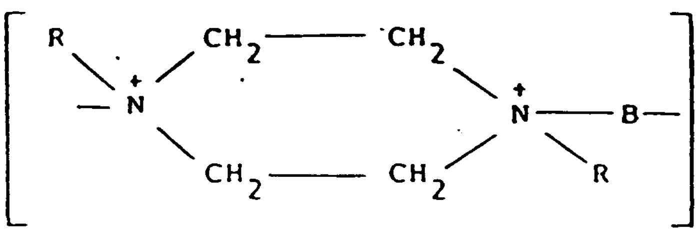 $(2\ X^-)_n$ (VI)

in der R, X, B und n die weiter oben gegebenen Bedeutungen haben.

**19.** Desinfektionsverfahren nach Anspruch 10, dadurch gekennzeichnet, daß man als Polymer eines quaternären Ammoniums ein Polymer der folgenden Formel (VII) einsetzt:

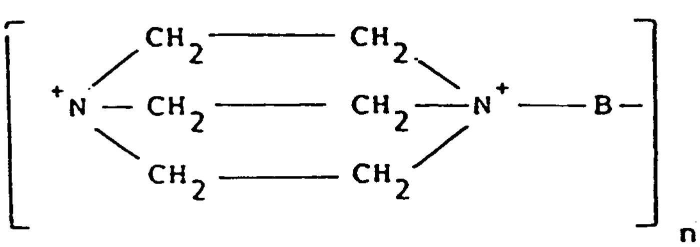 $(2\ X^-)_n$ (VII)

in der B, X und n die weiter oben gegebenen Bedeutungen haben.

**20.** Desinfektionsverfahren nach Anspruch 10, dadurch gekennzeichnet, daß man als Wirkstoffe ein Copolymer eines quaternären Ammoniums einsetzt, das durch Kondensation von mindestens zwei tertiären difunktionellen Aminen der Formeln (I), (II) und/oder (III) mit einem organischen Dihalogenid der Formel (IV) erhalten worden ist.

**21.** Desinfektionsverfahren nach Anspruch 10, dadurch gekennzeichnet, daß man als Wirkstoffe mindestens ein Polymer oder Copolymer eines quaternären Ammoniums einsetzt, ausgewählt unter folgenden:

- ein Polymer der Formel (V), in der
  R = $-CH_3$, A = $(CH_2)_2$,

  B = 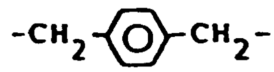 und X = Br ;

  oder

  R = $-CH_3$, A = $(CH_2)_3$,

  B = 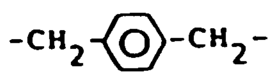 und X = Br ;

  oder

  R = $-CH_3$, A = $-CH_2-CH=CH-CH_2-$,

  B = 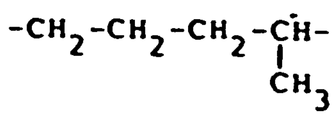 und X = Br ;

  oder
- ein Polymer der Formel (VI), in der
  R = $-CH_3$, X = Br und B = $-CH_2-CH=CH-CH_2-$ ; oder

  R = $-CH_3$, X = Br und

  B = 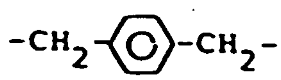 ;
- ein Polymer der Formel (VII), in der
  B = $(CH_2)_3$ und X = Br ; oder

  B = 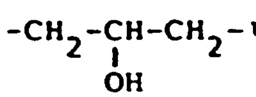 und X = Br ;

  oder

  B = $(CH_2)_5$ und X = Br ; oder

  B = $(CH_2)_4$ und X = Br ; oder

  B = $-CH_2-CH=CH-CH_2-$ und X = Br ; oder

  B = $-CH_2-CH_2-O-CH_2-CH_2-$ und X = Br ; oder

  B = $(CH_2)_6$ und X = Br ; oder

  B = $(CH_2)_8$ und X = Br ; oder

B = $(CH_2)_{10}$ und X = Br ; oder

B = 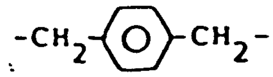 und X = Br ;

- ein Copolymer eines quaternären Ammoniums, gebildet durch Kondensation von tertiären difunktionellen Aminen mit einem Dihalogenid, worin
  - die Amine DABCO (das Produkt der Formel (III)) und N,N-Dimethylpiperazin sind und das Dihalogenid 1,3-Dibrompropan ist, oder
  - die Amine N,N,N',N'-Tetramethyl-2-buten-1,4-diamin und N,N-Dimethylpiperazin sind und das Dihalogenid 1,4-Dichlor-2-buten ist, oder
  - die Amine N,N,N',N'-Tetramethyl-2-buten-1,4-diamin und DABCO (das Produkt der Formel (III)) sind und das Dihalogenid 1,4-Dichlor-2-buten ist, oder
  - die Amine N,N,N',N'-Tetramethylhexandiamin und DABCO sind und das Dihalogenid 1,5-Dibrompentan ist.

**22.** Desinfektionsverfahren nach Anspruch 16, dadurch gekennzeichnet, daß man als Polymer eines quaternären Ammoniums ein Polymer der Formel (V), in der R für $CH_3$ steht, A für $(CH_2)_6$ steht, B für $(CH_2)_3$ steht und X für Br steht, einsetzt.